(19)

**Europäisches Patentamt**

**European Patent Office**

**Office européen des brevets**

(11) **EP 4 723 270 A2**

(12) **EUROPEAN PATENT APPLICATION**

(43) Date of publication:
08.04.2026 Bulletin 2026/15

(51) International Patent Classification (IPC):
**H01M 10/04** *(2006.01)*

(21) Application number: **26160450.8**

(22) Date of filing: **26.09.2024**

(52) Cooperative Patent Classification (CPC):
**G05B 19/41875; G05B 19/4183;** G05B 2219/45224;
H01M 10/04; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.09.2023 KR 20230130493**

(62) Document number(s) of the earlier application(s) in
accordance with Art. 76 EPC:
**24202803.3 / 4 535 107**

(71) Applicant: **LG Energy Solution, Ltd.**
**Seoul 07335 (KR)**

(72) Inventors:
• **KIM, Seol Hee**
**34122 Daejeon (KR)**
• **SIM, Min Kyu**
**34122 Daejeon (KR)**

• **PARK, Wi Dae**
**34122 Daejeon (KR)**
• **JUNG, Jung Youn**
**34122 Daejeon (KR)**
• **BAE, In Bong**
**34122 Daejeon (KR)**
• **KIM, Min Su**
**34122 Daejeon (KR)**
• **PARK, Jong Seok**
**34122 Daejeon (KR)**

(74) Representative: **BCKIP Part mbB**
**Landsberger Straße 98**
**80339 München (DE)**

Remarks:
This application was filed on 24-02-2026 as a
divisional application to the application mentioned
under INID code 62.

(54) **SYSTEM AND METHOD FOR MONITORING A BATTERY MANUFACTURING PROCESS**

(57) A monitoring system of monitoring a battery manufacturing process is provided. The system includes: a first server configured for storing a first coordinate-related data set in which coordinate data indicating lengthwise positions on an electrode are associated with inspection data and/or measurement data obtained from the positions of the electrode being subject to a plurality of manufacturing sub-processes, and an identification data set including an electrode identifier, ID, identifying a respective sectional electrode that has been obtained by cutting off a lengthwise section from the electrode, a memory storing instructions, and at least one processor configured to execute the instructions stored in the memory to perform operations of: 1) associating an electrode ID selected from the identification data set with the coordinate data of the first coordinate-related data set representing the lengthwise section of the electrode from which the sectional electrode identified by the electrode ID has been obtained, and 2) generating monitoring data on the battery manufacturing process based on the coordinate data associated with the electrode ID.

[FIG. 2]

**Description**

[Technical Field]

The present invention relates to a system and a method for monitoring a battery manufacturing process, and a method for tracking a process event in a battery manufacturing process.

[Background Art]

Batteries, and especially, secondary batteries can be charged and discharged multiple times, unlike primary batteries. Secondary batteries have been widely used as energy sources for various types of wireless devices such as handsets, laptop computers, and cordless vacuum cleaners. Recently, a main use of batteries is moving from mobile devices to mobility, as manufacturing costs per unit capacity of batteries drastically decrease due to improved energy density and economies of scale and a range of battery electric vehicles (BEVs) increases to the same level as fuel vehicles.

Battery cells are manufactured by an electrode process, an assembly process, and an activation process. A plurality of manufactured battery cells are included in a battery module and a battery pack, which are larger units, to be used in an electric vehicle and the like. The electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

Korean Patent Publication No. 10-2023-0025288 discloses an electrode location tracking system.

[Disclosure of the Invention]

[Technical Problem]

The present invention is directed to providing a system and method capable of retrieving history data of the manufacturing process of a battery, and a method for tracking a process event in a battery manufacturing process.

[Technical Solution]

To this end, the present invention provides a system in accordance with claim 1, a method in accordance with claim 16 and another method in accordance with claim 22.

According to a first aspect of the invention, a system for monitoring a battery manufacturing process may include a first server configured for storing a first coordinate-related data set in which coordinate data indicating lengthwise positions on an electrode are associated with inspection data and/or measurement data obtained from the positions of the electrode being subject to a plurality of manufacturing sub-processes, and an identification data set including an electrode identifier, ID, identifying a respective sectional electrode that has been obtained by cutting off a lengthwise section from the electrode.

The system may further include a memory storing instructions, and at least one processor configured to execute the instructions stored in the memory to perform an operation of associating an electrode ID selected from the identification data set with the coordinate data of the first coordinate-related data set representing the lengthwise section of the electrode from which the sectional electrode identified by the electrode ID has been obtained. Optionally, the processor may be further configured to execute the instructions stored in the memory to perform an operation of generating monitoring data on the battery manufacturing process based on the coordinate data associated with the electrode ID.

According to some embodiments, the first coordinate-related data set may comprise at least one of: electrode lot data indicating a material of the electrode; raw data of the inspection data and/or the measurement data; or processed data of the inspection data and/or the measurement data.

According to some embodiments, the first server may be further configured to store a second coordinate-related data set in which processed coordinate data is associated with the inspection data and/or the measurement data obtained in a respective one of the plurality of sub-processes, the processed coordinate data being obtained by matching the coordinate data in respective ones of the plurality of sub-processes with each other such that they indicate identical physical parts of the electrode.

According to some embodiments, the processed coordinate data may be generated from the coordinate data by at least one of: 1) correcting, when the coordinate data is inverted due to inversion of positions of a start portion and an end portion of the electrode in a respective sub-process, the inverted coordinate data to be matched with the coordinate data in the preceding and following sub-processes; 2) correcting, when the coordinate data is inverted due to inversion of a corresponding surface of the electrode between subsequent sub-processes according to a direction of winding the electrode and a direction of unwinding the electrode, the inverted coordinate data to be matched with the coordinate data in the preceding and following sub-processes; and 3) correcting, when the coordinate data is changed due to an electrode loss occurring in a respective sub-process and/or between subsequent sub-processes, the changed coordinate data to be matched with the coordinate data in the preceding and following sub-processes.

According to some embodiments, the operations may further include associating the processed coordinate data of the second coordinate-related data set with a corresponding electrode ID selected from the identification data set.

According to some embodiments, the operation of generating the monitoring data may include generating inter-process monitoring data by mapping the processed coordinate data in one of the sub-processes, associated with the electrode ID, with processed coordinate data in another one of the sub-processes, associated with the electrode ID, and/or by mapping inspection data and/or measurement data obtained in one of the sub-processes, associated with the electrode ID or the processed coordinate data, with inspection data and/or measurement data obtained in another one of the sub-processes, associated with the electrode ID or the processed coordinate data.

According to some embodiments, the identification data set further may comprise at least one of: 1) first electrode ID-related data including coordinate value(s) on the electrode in one of the plurality of sub-processes in which the electrode ID is assigned, the coordinate value(s) representing a lengthwise section of the electrode from which the sectional electrode identified by the electrode ID has been obtained; 2) second electrode ID-related data including at least one of: coordinate value(s) on the electrode in one of the plurality of sub-processes in which the sectional electrode and another sectional electrode are coupled, the coordinate value(s) representing a lengthwise section of the electrode from which the sectional electrode identified by the electrode ID has been obtained, or coordinate value(s) on another electrode in said sub-process in which the sectional electrode identified by the electrode ID and the another sectional electrode are coupled, the coordinate value(s) representing a lengthwise section of another electrode from which the another sectional electrode has been obtained; or 3) pitch data indicating a length of the sectional electrode and/or a length of the another sectional electrode.

According to some embodiments, the operations may further include associating the processed coordinate data in a respective one of the plurality of sub-processes with coordinate value(s) included in the first electrode ID-related data and/or the second electrode ID-related data through the electrode ID.

According to some embodiments, the first server may further be configured to store at least one of: 1) an equipment data set obtained from a process equipment physically interacting with the electrode and/or the sectional electrode during any one of the plurality of sub-processes; or 2) a quality data set related to quality of the electrode, among the inspection data and/or measurement data.

According to some embodiments, the operations may further include associating the coordinate data and/or the processed coordinate data associated with the electrode ID with equipment data of the equipment data set and/or quality data of the quality data set. Further optionally, the operation of generating the monitoring data may comprise generating monitoring data, based on the coordinate data and/or the processed coordinate data associated with the electrode ID and the equipment data and/or quality data.

According to some embodiments, at least some of the data sets stored in the first server may further comprise time series data indicating a point of time at which data included in the data sets has been obtained.

According to some embodiments, the system may further comprise a second server configured to generate the first coordinate-related data set and/or the second coordinate-related data set and upload the first coordinate-related data set and/or the second coordinate-related data set to the first server.

According to some embodiments, the system may further comprise a third server configured to generate a compressed coordinate-related data set by associating processed data of the inspection data and/or the measurement data or a subset of the processed data of the inspection data and/or the measurement data with the coordinate data and transmit the compressed coordinate-related data set to the second server.

According to some embodiments, the second server may be configured to integrate the compressed coordinate-related data set into the first coordinate-related data set.

According to some embodiments, the system may further comprise a fourth server configured to generate the identification data set and upload the identification data set to the first server.

According to some embodiments, the first coordinate-related data set and/or the second coordinate-related data set is or includes a roll map data set indicating characteristics of a material of the electrode on the basis of the coordinate data or the processed coordinate data.

According to a second aspect of the invention, a method for monitoring a battery manufacturing process may include obtaining a first coordinate-related data set by associating coordinate data indicating lengthwise positions on an electrode with inspection data and/or measurement data obtained from the positions of the electrode being subjected to a plurality of manufacturing sub-processes, obtaining an identification data set including an electrode identifier, ID, identifying a respective sectional electrode that has been obtained by cutting off a lengthwise section from the electrode, and associating an electrode ID selected from the identification data set with the coordinate data of the first coordinate-related data set representing the lengthwise section of the electrode from which the sectional electrode identified by the electrode ID has been obtained

The method of this aspect of the invention may be carried out using the system of the first aspect of the invention. All features and advantages disclosed in connection with the first aspect of the invention, therefore, are also disclosed for the second aspect of the invention and vice versa.

According to some embodiments, the method may further include generating monitoring data on the battery manufacturing process, based on the coordinate data associated with the electrode ID.

According to some embodiments, the method may further include obtaining processed coordinate data by matching the coordinate data in respective ones of the plurality of sub-processes with each other such that they indicate identical physical parts of the electrode.

According to some embodiments, the method may further include obtaining a second coordinate-related data set by associating the processed coordinate data with the inspection data and/or the measurement data obtained in a respective one of the plurality of sub-processes.

According to some embodiments, the method may further include associating the processed coordinate data of the second coordinate-related data set with a corresponding electrode ID selected from the identification data set. Optionally, the monitoring data may be generated based on the processed coordinate data associated with the electrode ID.

According to some embodiments, generating the monitoring data may include generating inter-process monitoring data by mapping the processed coordinate data in one of the sub-processes, associated with the electrode ID, with processed coordinate data in another one of the sub-processes, associated with the electrode ID; and/or mapping the inspection data and/or measurement data obtained in one of the sub-process, associated with the electrode ID or the processed coordinate data, with inspection data and/or measurement data obtained in another one of the sub-processes, associated with the electrode ID or the processed coordinate data.

According to some embodiments, the identification data set may further comprises at least one of: 1) first electrode ID-related data including coordinate value(s) on the electrode in one of the plurality of sub-processes in which the electrode ID is assigned, the coordinate value(s) representing a lengthwise section of the electrode from which the sectional electrode identified by the electrode ID has been obtained; 2) second electrode ID-related data including at least one of: coordinate value(s) on the electrode in one of the plurality of sub-processes in which the sectional electrode and another sectional electrode are coupled, the coordinate value(s) representing a lengthwise section of the electrode from which the sectional electrode identified by the electrode ID has been obtained, or coordinate value(s) on another electrode in said sub-process in which the sectional electrode identified by the electrode ID and the another sectional electrode are coupled , the coordinate value(s) representing a lengthwise section of another electrode from which the another sectional electrode has been obtained; or 3) pitch data indicating a length of the sectional electrode and/or a length of the another sectional electrode.

According to some embodiments, the method may further include associating the processed coordinate data in a respective one of the plurality of sub-processes with coordinate value(s) included in the first electrode ID-related data and/or the second electrode ID-related data through the electrode ID.

According to some embodiments, the method may further include obtaining an equipment data set from a process equipment physically interacting with the electrode and/or the sectional electrode during any one of the plurality of sub-processes, and/or obtaining a quality data set related to quality of the electrode, among the inspection data and/or measurement data.

According to some embodiments, the method may further include associating the coordinate data and/or the processed coordinate data associated with the electrode ID with equipment data of the equipment data set and/or quality data of the quality data set.

Further exemplary embodiments of the present invention provide a battery manufacturing system. The system may include: a first server storing a first coordinate-related data set in which coordinate data indicating a position of each electrode moved in a plurality of processes is connected with inspection data and/or measurement data of the electrode obtained in the plurality of processes, and an identification data set including an electrode identifier (ID) identifying the electrode; a memory storing instructions; and at least one processor.

The at least one process is configured to execute the instructions to perform operations of:

1) connecting an electrode ID selected from the identification data set with coordinate data of the first coordinate-related data set corresponding to the selected electrode ID; and

2) generating monitoring data for manufacturing a battery, based on data about connection of the electrode ID with the coordinate data.

The first coordinate-related data set may include at least one of electrode lot data indicating an electrode material, processed data of the inspection data and/or the measurement data, or raw data of the inspection data and/or the measurement data.

The first server may further store a second coordinate-related data set in which processed coordinate data, which is obtained by processing the coordinate data in each of the plurality of processes to correspond to a position of the same real electrode, is connected with the inspection data and/or the measurement data in each of the plurality of processes.

The coordinate data may be processed into the processed coordinate data by at least one of:

1) when the coordinate data is inverted due to inversion of positions of a start and end of the electrode in the processes, correcting the inverted coordinate data to be the same in the processes;

2) when the coordinate data is inverted due to inversion of a corresponding surface of the electrode between the processes according to a direction of winding the electrode and a direction of unwinding the electrode, correcting the inverted coordinate data to be the same in the processes; and

3) when the coordinate data is changed due to an electrode loss occurring in each of the processes and/or between the processes, correcting the changed coordinate data to be the same in the processes.

The operations may further include connecting the processed coordinate data with the electrode ID selected from the identification data set.

The generating of the monitoring data may include generating inter-process monitoring data by comparing the processed coordinate data in each of the processes related to the electrode ID with inspection data and/or measurement data in each of the processes related to the electrode ID and the processed coordinate data in the plurality of processes.

The identification data set may further include at least one of:

1) first electrode ID-related data including a coordinate of the electrode corresponding to the electrode ID in a process in which the electrode ID is assigned among the plurality of processes;

2) second electrode ID-related data including at least one of the coordinate of the electrode corresponding to the electrode ID or a coordinate of another electrode coupled to the electrode and corresponding to the electrode ID in a process of coupling the electrode and the other electrodes among the plurality of processes; or

3) pitch data indicating a length of the electrode and/or a length of the other electrode coupled to the electrode.

The operations may further include connecting the processed coordinate data in each of the processes with coordinates included in the first electrode ID-related data and/or the second electrode ID-related data through the electrode ID.

The first server may further include at least one of:

1) an equipment data set obtained from each of a plurality of pieces of process equipment for manufacturing an electrode; or

2) a quality data set related to quality of the electrode among the inspection data and/or measurement data.

Each data set stored in the first server may further include time series data indicating a point in time when data included in the data sets has been obtained, and the data included in the data set may be related to the time series data corresponding to the data.

The operations may further include connecting the coordinate data and/or the processed coordinate data related to the electrode ID with equipment data of the equipment data set and/or quality data of the quality data set.

The generating of the monitoring data may include generating monitoring data, based on data about connection of the electrode ID, the coordinate data and/or the processed coordinate data, and the equipment data and/or quality data.

The system may further include a second server configured to generate the first coordinate-related data set and/or the second coordinate-related data set and upload the first coordinate-related data set and/or the second coordinate-related data set to the first server.

The system may further include a third server configured to generate a 1-1 coordinate-related data set by connecting processed data of the inspection data and/or the measurement data or some of the processed data with the coordinate data and transmit the 1-1 coordinate-related data set to the second server.

The second server may integrate the 1-1 coordinate-related data set into the first coordinate-related data set.

The system may further include a fourth server configured to generate the identification data set and upload the identification data set to the first server.

The first coordinate-related data set and/or the second coordinate-related data set may be or include a roll map data set indicating characteristics of a material of a real electrode on the basis of the coordinate data or the processed coordinate data.

Example embodiments of the present invention provide a battery manufacturing method. The battery manufacturing method includes: obtaining a first coordinate-related data set by connecting coordinate data indicating a position of each electrode moved in a plurality of processes with inspection data and/or measurement data of the electrode obtained in each of the plurality of processes; obtaining a second coordinate-related data set by connecting processed coordinate data, which is obtained by processing the coordinate data in each of the plurality of processes to correspond to a position of the same real electrode, with the inspection data and/or the measurement data in each of the plurality of processes; obtaining an identification data set including an electrode ID identifying the electrode; connecting an electrode ID selected from the identification data set with processed coordinate data of the second coordinate-related data set corresponding to the electrode ID; and generating monitoring data for manufacturing a battery, based on data of the connection of the electrode ID and the processed coordinate data.

The generating of the monitoring data may further include generating inter-process monitoring data by comparing the electrode ID and the processed coordinate data in each of the processes related to the electrode ID with the inspection data and/or measurement data in each of the processes related to the electrode ID and the processed coordinate data in the plurality of processes.

The identification data set may further include at least one of:

1) first electrode ID-related data including a coordinate of the electrode corresponding to the electrode ID in a process of assigning the electrode ID among the plurality of processes; or

2) second electrode ID-related data including at least one of the coordinate of the electrode corresponding to the electrode ID or a coordinate of another electrode coupled to the electrode and corresponding to the electrode ID in a process of coupling the electrode and the other electrode among the plurality of processes,

The battery manufacturing method further comprises connecting the processed coordinate data in each of the processes with coordinates included in the first electrode ID-related data and/or the second electrode ID-related data through the electrode ID.

The battery manufacturing method may further include additionally connecting the processed coordinate data or processed coordinate data related to the electrode ID with at least one piece of equipment data obtained by each of a plurality of pieces of process equipment and/or at least one piece of quality data related to quality of the electrode among the inspection data and/or the measurement data.

Another aspect of the present invention provides a method of tracking a battery process event. The method includes inputting, as a search parameter, a battery product ID related to an electrode ID or information related to the battery product ID, and receiving monitoring data of the battery manufacturing process related to the electrode ID, the monitoring data being generated based on the search parameter.

The monitoring data may include information about an electrode related to the electrode ID in at least one process among a plurality of processes of producing an electrode.

The information about the electrode may include coordinate data related to the electrode ID, and the coordinate data may represent a position of an electrode sheet or the electrode moved in the plurality of processes.

The information related to the battery product ID may include identification information of a place or an object in which a battery product is installed.

In an embodiment, the method may further include displaying the received monitoring data.

The battery product ID may include at least one of a battery pack ID, a battery module ID, and a battery cell ID.

The coordinate data may be processed coordinate data obtained by processing coordinate data in each process to correspond to the position of the same real electrode.

The information about the electrode may include process event data related to the electrode ID and/or the coordinate data.

The process event data may include at least one of inspection data and/or measurement data of each electrode, time-series data indicating a point in time when each piece of data is obtained, and equipment data obtained from each piece of process equipment for manufacturing an electrode.

The monitoring data may include at least one of inter-process monitoring data comparing processed coordinate data of the electrode in one process with processed coordinate data of the electrode in another process, and inter-process monitoring data comparing first process event data related to the processed coordinate data of the electrode in the process with second process event data related to the processed coordinate data of the electrode in the another process.

The monitoring data may further include information about an ID of a battery semi-finished product related to the battery product ID and/or the electrode ID.

[Advantageous Effects of the Invention]

According to the present invention, traceability of a roll map and an intermediate product, such as a mono-cell or a bi-cell, that are generated in an electrode manufacturing process can be improved. In addition, traceability can be improved in terms of a relationship between a process of assembling an intermediate product and a subsequent process after the assembly process. Accordingly, the reliability of the manufacture of a battery may improve.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIGS. 1 and 2 illustrate a battery manufacturing system according to example embodiments.

FIG. 3 is a diagram for describing operations of a processor and a memory that are included in a battery manufacturing system.

FIG. 4 illustrates a coating device according to example embodiments.

FIG. 5 illustrates a roll pressing device according to example embodiments.

FIG. 6 illustrates a notching device according to example embodiments.

FIGS. 7 and 8 illustrate a lamination device according to example embodiments.

FIG. 9 is a diagram illustrating an offset distance of inspection and/or measuring devices.

FIG. 10 is a diagram illustrating correcting coordinate data when a start and end of an electrode are inverted.

FIG. 11 is a diagram illustrating surface inversion and start/end inversion of an electrode according to a direction of winding the electrode and a direction of unwinding the electrode.

FIG. 12 is a diagram illustrating processing coordinate data into processed coordinate data.

FIG. 13 is a diagram illustrating processing coordinate data into processed coordinate data.

FIG. 14 is a diagram illustrating an example in which time series data is connected with an electrode identifier (ID) and coordinate data.

FIG. 15 illustrates monitoring data generated by a battery manufacturing system according to example embodiments.

FIG. 16 illustrates another example of monitoring data generated by a battery manufacturing system according to example embodiments.

FIG. 17 is a flowchart of a battery manufacturing method according to example embodiments.

FIG. 18 illustrates a battery manufacturing system according to example embodiments.

FIG. 19 is a schematic diagram illustrating an example of process event data related to an electrode ID and/or a battery product ID.

FIG. 20 is a flowchart showing a method of tracking a process event in a battery manufacturing process, according to example embodiments.

[Description of Exemplary Embodiments of the Present Invention]

Hereinafter, exemplary embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

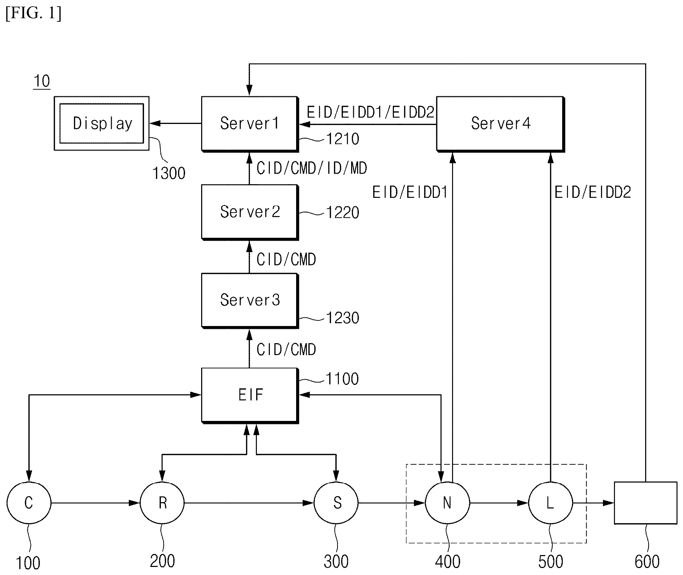

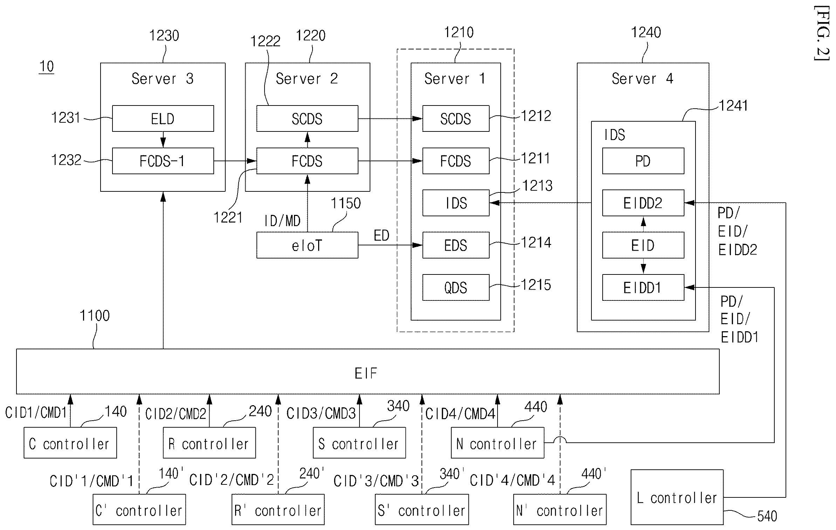

FIGS. 1 and 2 exemplarily illustrate a battery manufacturing system.

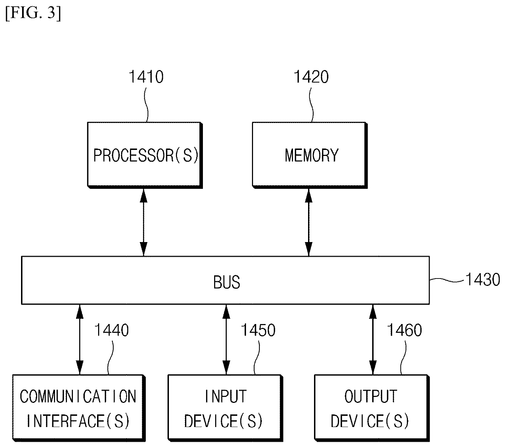

FIG. 3 is a diagram for describing operations of a processor and a memory that are included in a battery manufacturing system.

Referring to FIG. 1, a battery manufacturing system 10 may include a coating device 100, a roll pressing device 200, a slitting device 300, a notching device 400, a lamination device 500, and a subsequent process device 600. The system 10 may further include an equipment interface (EIF) 1100 and at least one of first to fourth servers 1210, 1220, 1230, and 1240. Further optionally, a display device 1300 may be provided.

The first to fourth servers 1210, 1220, 1230, and 1240 and, optionally, the EIF 1100 may form part of a monitoring system for monitoring the battery manufacturing process.

The battery manufacturing system 10 may be configured to perform a series of manufacturing sub-process for manufacturing a battery cell (e.g., a pouch type battery cell, a prismatic battery cell, or a cylindrical battery cell). The sub-processes may be carried out, for example, as roll-to-roll processes.

An electrode manufacturing process, in which an electrode is manufactured from an electrode sheet, may include, a coating process, a roll press process, and slitting process as sub-processes. An assembly process (see a dotted box in FIG. 1) may include a notching process and a lamination process as sub-processes. The notching process is a process of processing an electrode sheet to form an electrode tab, and the lamination process is a process of stacking electrodes on which electrode tabs are formed to manufacture unit cells such as mono-cells or bi-cells.

The unit cells are stacked again to form an electrode assembly of stacked cells or folded cells. The electrode assembly is accommodated in a cell housing, and electrolyte is injected to form a semi-finished battery cell. The semi-finished battery cell becomes a finished battery cell when electrical characteristics are assigned thereto by an activation process or the like. A plurality of manufactured finished battery cells may be grouped together to manufacture a battery module or a battery pack. As described above, even after the lamination process, various subsequent sub-processes, such as a stacking process, a folding process, a housing insertion process, an injection process, the activation process, a modularization process, and a pack process, may be performed to obtain finished products such as battery cells, battery modules, and a battery pack.

An electrode sheet unwound from an electrode roll put into the coating device 100 (the coating process) may be processed by a die coater of the coating device 100, pressing rolls of the roll pressing device 200, and a slitting knife of the slitting device 300, and the processed electrode sheet may be wound to an electrode roll again. Accordingly, processing performed by the coating device 100, the roll pressing device 200, and the slitting device 300 to produce electrodes may be referred to as a roll-to-roll process, respectively. An electrode roll put into the notching device 400 may be notched to form electrode tabs at certain pitch intervals and the electrode sheet is wound again to form another electrode roll after an electrode ID is assigned as an identification mark. Therefore, processing performed by the notching device 400 may also be referred to as a roll-to-roll process. The lamination device 500 may laminate, for example, a negative electrode sheet unwound from a negative electrode roll, a positive electrode sheet unwound from a positive electrode roll, and separator sheets unwound from separator rolls together. Accordingly, processing performed by the lamination device 500 may also be referred to as a roll-to-roll process.

The coating device 100 may perform the coating process on an electrode sheet. The coating process is a process of coating the electrode sheet with an electrode slurry. The electrode slurry may include an active material, a conductive agent, a binder, and a solvent.

The electrode slurry may be prepared by solvating the active material, the conductive material, the binder, and the like in the solvent.

The roll pressing device 200 may perform the roll press process on an electrode sheet. In the roll press process, the electrode sheet coated with the electrode slurry may be passed through between the pressing rolls. Through the roll press process, a surface of the electrode sheet may be planarized, and a binding force between the active material of the electrode sheet and a current collector may be improved.

The slitting device 300 may perform the slitting process on an electrode sheet. The electrode sheet may be divided into a plurality of electrode sheets by the slitting process.

The notching device 400 may form tabs on an electrode sheet, and form a V-shaped groove to cut the electrode sheet as needed. In the notching process, negative electrode tabs TN and positive electrode tabs TP may be formed.

In the notching process, electrode IDs EID may be provided to the negative electrode tabs TN. The electrode IDs EID may be formed by a method such as laser printing or ink printing. Accordingly, each of the negative electrode tabs TN may include an electrode ID EID. Unlike the negative electrode tabs TN, the positive electrode tabs TP may not be assigned electrode IDs EID to prevent a defect.

However, the present invention is not limited thereto, and electrode IDs EID may also be assigned to the positive electrode tabs TP when an appropriate safety device such as a fume dust collector is installed. Thus, generally, electrode IDs EID may be formed on the electrode tabs TN, TP, preferably, in the notching process. To this end, the system 10 may include an electrode ID marker (not shown) configured to form an electrode ID on the electrode tabs formed in the notching process. The electrode ID marker may form part of the notching device 400.

The electrode IDs EID may include symbols representing an order of the electrode tabs TN. The symbols of the electrode IDs EID may include Arabic numerals but are not limited thereto. The symbols of the electrode IDs EID may include arbitrary characters providing information about the order of the electrode tabs TN. The electrode IDs EID may be barcode or QR code. Generally, one electrode ID identifies one electrode tab.

The lamination process is a sub-process subsequent to the notching process. Therefore, a positive electrode roll and a negative electrode roll completed in the notching process are loaded on an unwinder of the lamination device 500. In this case, the electrode IDs EID may be provided to the electrode tabs by marking IDs in the notching process. For example, electrode IDs EID may be assigned to negative electrode tabs in the notching process. A positive electrode sheet is notched to form positive electrode tabs in the notching process but electrode IDs are not provided thereto. Alternatively, in the notching process, electrode IDs may be provided to positive electrode tabs and negative electrode tabs.

In the lamination process, a positive electrode sheet and a negative electrode sheet are cut to form a positive electrode and a negative electrode, and the positive electrode and the negative electrode are laminated with a separator interposed therebetween. In this case, the electrodes cut in the lamination process may be referred to as real or sectional electrodes or electrodes in a narrow sense.

In the lamination process, the sectional electrodes are derived from the electrode sheet by cutting, wherein the electrode sheet has already been subject to and moved in the previous sub-processes such as the coating process, the roll press process, the slitting process, and the notching process. In addition, electrode IDs EID have been assigned in an earlier sub-process, e.g., in the notching process, to each of the electrodes cut in the lamination process also are. The electrodes (positive and negative electrodes) manufactured in the lamination process may be identified by coordinates corresponding to electrode IDs marked on the electrode tab of the respective electrode, and the coordinates of the electrode IDs correspond to coordinate value(s) of the electrode sheet in the notching process, said coordinate value(s) of the electrode sheet representing a length position of the respective, individual electrode within the electrode sheet. In addition, the coordinates in the lamination process corresponding to the real or sectional electrodes correspond to coordinates corresponding to the positions of the same real electrodes in the coating process, the roll press process, and the slitting process that are electrode manufacturing processes. In this sense, the electrode sheet moved in the sub-processes carried out before the lamination process will be referred to as an electrode in a broad sense in that the coordinates (coordinate data) corresponding to the real electrodes are provided although the electrode sheet was not cut into real electrodes in the processes before the lamination process.

Generally, in the present disclosure, the electrode sheet may simply be referred to as an electrode for the purpose of simplicity, insofar as the referent can be clearly understood from the context. However, in case a clear distinction is more appropriate, the part or structure obtained by cutting off a lengthwise section from the electrode (sheet) may be referred as a sectional electrode.

Information about a position of each electrode moved in a respective sub-process or on a respective device, e.g., on the coating device 100, the roll pressing device 200, the slitting device 300, and the notching device 400 described above is obtained in the form of coordinate data CD. Generally, the coordinate data CD may include coordinate values representing at least lengthwise positions on the electrode (sheet). Inspection data ID and/or measurement data MD of the respective electrode obtained in the respective sub-process, e.g., by the respective device, may be related to or associated with the coordinate data CD to generate coordinate-related inspection data CID and/or measurement data CMD. The coordinate-related inspection data CID and/or measurement data CMD may be transmitted to a server to generate monitoring data. Generally, coordinate data may be obtained in a respective sub-process by means of a position measurement device, such as an encoder or similar.

Although not shown, the lamination device 500 may also obtain coordinate data CD indicating a position of an electrode, and inspection data and/or coordinate data in the lamination process. Thus, the coordinate-related inspection data CID and/or measurement data CMD in the lamination process may also be transmitted to the server to generate monitoring data.

The EIF 1100 may be a device for communication between controllers (e.g., process programmable logic controllers (PLCs)) of manufacturing equipment and servers. For example, a controller 140 of the coating device 100, a controller 240 of the roll pressing device 200, a controller 340 of the slitting device 300, and a controller 440 of the notching device 400 may communicate with the server through the EIF 1100. Although not shown, a controller 540 of the lamination device 500 may also communicate with the server through the EIF 1100.

Thus, for example, data of process events occurring a coating device 100, a roll pressing device 200, a slitting device 300, a notching device 400, and a lamination device 500 of a negative electrode may be transmitted from the controllers 140, 240, 340, 440, and 540 in each process to the servers 1230, 1220 and 1210. The process events may be represented in the coordinate-related inspection data CID and/or measurement data CMD of obtained in the respective sub-process/by the respective device 100, 200, 300, 400, 500, e.g., coordinate related inspection data/measurement data CID1/CMD1, CID2/CMD2, CID3/CMD3, and CID4/CMD4 as indicated in FIG. 2.

Similarly, data of process events occurring in a coating device 100, a roll pressing device 200, a slitting device 300, a notching device 400, and a lamination device 500 of a positive electrode may be transmitted from controllers 140', 240', 340', 440', and 540' of the processes to the servers 1230, 1220 and 1210. The process events may be represented in the coordinate-related inspection data CID and/or measurement data CMD of obtained in the respective sub-process/by the respective device 100, 200, 300, 400, 500, e.g., coordinate related inspection data/measurement data CID1'/CMD1', CID2'/CMD2', CID3'/CMD3', and CID4'/CMD4' as indicated in FIG. 2.

Data of process events generated by various subsequent process devices 600 in a stacking process, a folding process, a housing insertion process, an injection process, an activation process, a modularization process, and a pack process may also be transmitted to the servers 1230, 1220, and 1210.

Meanwhile, an electrode ID EID obtained in the notching process and first electrode ID-related data EIDD1 including coordinates of an electrode corresponding to the electrode ID EID may be transmitted to the first server 1210, e.g., through the fourth server 1240.

Second electrode ID-related data EIDD2 including at least one of coordinates of the electrode corresponding to an electrode ID EID obtained in the lamination process (e.g., coordinates of a negative electrode) or coordinates of another electrode coupled to the electrode and corresponding to the electrode ID EID (e.g., coordinates of a positive electrode) may be transmitted to the first server 1210, e.g., through the fourth server 1240. The fourth server 1240 may be a management server dedicated to processing electrode IDs.

The first server 1210 may generate monitoring data on the battery manufacturing process by connecting or associating the above-described coordinate-related inspection data CID and/or measurement data CMD with an electrode ID EID corresponding to the coordinates. In this case, monitoring data may be generated by additionally matching the coordinates included in the first electrode ID-related data EIDD1 and the second electrode ID-related data EIDD2 with the electrode ID, the coordinate-related inspection data CID and/or measurement data CMD. That is, generally, monitoring data may be generated by associating an electrode ID EID assigned to a sectional electrode, which is derived from a specific length section of the electrode (sheet), with the coordinate-related inspection data CID and/or measurement data CMD obtained in the same specific length section.

The battery manufacturing system 10 will be described in more detail with reference to FIGS. 2 and 3 below.

The battery manufacturing system 10, specifically, the monitoring system of the battery manufacturing system 10, may include: a first server 1210 storing a first coordinate-related data set (FCDS) 1221 in which coordinate data CD indicating a position of each sectional electrode within the electrode (sheet) moved in a plurality of processes is connected or associated with inspection data ID and/or measurement data MD of each sectional electrode obtained in the plurality of sub-processes, and an identification data set (IDS) 1213 including an electrode ID EID identifying each sectional electrode; a memory 1420 storing instructions; and at least one processor1410.

The at least one processor1410 may be configured to execute the instructions to perform operations of:

1) connecting or associating an electrode ID EID selected from the IDS 1213 with coordinate data CD of the FCDS 1221 corresponding to the selected electrode ID EID; and

2) generating monitoring data for manufacturing a battery, based on data about the connection of the electrode ID EID with the coordinate data CD.

The battery manufacturing system 10 may further include a measuring device and/or an inspector. The measuring device and the inspector, optionally, may form part of the monitoring system. The measuring device may be configured to measure an electrode sheet ES to collect measurement data of the electrode sheet ES. The measuring device may measure the electrode sheet ES by a scanning method. The measurement data may include a plurality of measured values expressed numerically. For example, the measurement data may include size data, e.g., a thickness and a width, of the electrode sheet ES, the amount of loading a coating material on the electrode sheet ES, size data, e.g., a width of an insulating material on the coating material and an overlapping width between the coating material and the insulating material, mismatch data between lanes of coated portions of a top surface of the electrode sheet ES and lanes of coated portions of a back surface of the electrode sheet ES, and the like. Here, the amount of loading is an amount of the coating material loaded per unit area of the electrode sheet ES, and may be an area density of the coating material.

Whether a measured portion of the electrode sheet ES is defective or not may be determined by processing the measurement data by a set method. When an amount of a measured coating material on the electrode sheet ES (e.g., the amount of loading the coating material on the electrode sheet ES or a thickness of the electrode sheet ES) is in a set range including upper and lower limits, a corresponding portion of the electrode sheet ES may be determined as a good-quality portion. The corresponding portion of the electrode sheet ES may be determined as defective, when the amount of the measured coating material on the electrode sheet ES (e.g., the amount of loading the coating material on the electrode sheet ES or the thickness of the electrode sheet ES) is less than the lower limit or greater than the upper limit.

The measuring device may include, for example, a time delay and integration (TDI) camera, a complementary metal oxide semiconductor (CMOS) image sensor, and a time-of-flight (TOF) sensor. The measuring device may include an emitter and a receiver that are configured to perform measurement using non-destructive signals such as ultrasound waves, microwaves, terahertz waves, or infrared rays. The measuring device may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may be configured to generate the coordinate-related measurement data CMD by connecting the coordinate data CD with the measurement data MD.

The inspector may be configured to inspect the electrode sheet ES to collect inspection data of the electrode sheet ES. The inspector may be configured to detect defects such as a surface defect of the electrode sheet ES, based on a change in a color of a surface of the electrode sheet ES, a change in reflectivity, etc.

The inspection data ID collected by the inspector may include a result of judging the quality of a portion of the electrode sheet ES and a process event. For example, the inspection data may include data about the appearance of the electrode sheet ES collected by an image-based inspection device such as a vision machine, data about disconnections and seams on the electrode sheet ES, data about a portion of the electrode sheet ES on which sampling inspection is performed, data about a portion of the electrode sheet ES to be scrapped, data about the scraped portion of the electrode sheet ES, data about whether the coating material and the insulating material on the electrode sheet ES are defective or not, data about reference points indicating a position of the electrode sheet ES, and defect data such as pinhole defects, crater defects, line defects, crack defects, side ring defects, island defects, folding defects, wrinkle defects, pit defects, and scratch defects. The reference points may be formed on the electrode sheet ES at certain intervals, and the positions of other elements on the electrode sheet ES may be identified on the basis of the reference points. The inspector may be a color sensor, a seam sensor, a reference point sensor, or a vision machine.

The inspector may be configured to generate the coordinate-related inspection data CID by connecting the coordinate data CD with the inspection data ID.

The measurement data and the inspection data described above may be time series data. The measurement data and the inspection data may be temporally ordered. Temporary ordering is a main feature of time series data and should be understood as organizing events in an order in which they occur and arrive to be processed. That is, the measurement data and the inspection data may be stored based on a point in time when measurement and inspection are performed, and may be related to time. Accordingly, each of measurement values of the measurement data may be matched to a time point, and each of inspection values of the inspection data may be matched to a time point.

For example, data of measurement amounts (e.g., an amount of loading on the electrode sheet ES or a thickness of the electrode sheet ES) may include a series of measurement amounts (e.g., amounts of loading on the electrode sheet ES or thicknesses of the electrode sheet ES) and time values related to the series of measurement amounts. The measurement amounts and the time values may be matched in a one-to-one manner but are not limited thereto. As another example, the defect data may include values indicating defects and time values related to the values indicating defects. Here, the values indicating defects should be understood to mean that the values include at least one of information as to whether there are defects or information about the types of defects.

The monitoring system of the battery manufacturing system 10 of the present invention includes the first server 1210 storing the FCDS 1221 and the IDS 1213.

In the FCDS 1221, the coordinate data CD indicating the position of each sectional electrode on the electrode (sheet) moved in the plurality of processes is connected or associated with the inspection data ID and/or the measurement data MD obtained on the electrode (sheet) in the plurality of sub-processes. The inspection data ID may be obtained by an inspector installed for inspection required in each process. The inspector may connect the inspection data ID with coordinate data indicating a position of a sectional electrode at which the inspection data is obtained. The measurement data MD may be obtained by a measuring device installed to obtain measurement values required in each process. The measuring device may connect the measurement data with the coordinate data indicating the position of the sectional electrode at which the measurement data is obtained. Coordinate-related data CID/CMD obtained by the inspector and/or the measuring device may be transmitted to a server through a controller of each process and the EIF 1100.

The monitoring system of the present example may include the second server 1220 that generates the FCDS 1221. The second server 1220 may generate the FCDS 1221 for each process by collecting coordinate data CD received from each process controller and inspection data CID and/or measurement data CMD related to the coordinate data CD. The second server 1220 may upload the generated FCDS 1221 to the first server 1210 at certain periods of time.

The FCDS 1221 may be a roll map data set indicating characteristics of a material of a real electrode, based on coordinate data. In other words, in the roll map data set, the coordinate data CD is associated with the inspection and/or measurement data ID/MD obtained in a respective sub-process on the electrode (sheet).

The second server 1220 may be configured to generate or store a roll map including data of a process event which may be represented in the inspection and/or measurement data ID/MD. Data of the roll map may include a value indicating the process event and coordinates matching the value. The coordinates may indicate a position on an electrode (sheet). Accordingly, the roll map enables feedback, feedforward, and tracking of a battery manufacturing process, which will be described below.

Roll maps may be generated in units of lots. A lot is a production unit of a roll-to-roll process, and an example thereof includes an electrode roll (or an electrode assembly roll) separated after a target winding length in each process is achieved. Similarly, an electrode roll loaded on an unwinder of each process is an example of a lot. The second server 1220 may generate or store a roll map for each of the sub-processes (e.g., a coating process, a roll press process, a slitting process, or a notching process).

In a roll map, time series data constructed over time (i.e., according to the progress of a process) may be related to coordinate data collected based on the amount of movement (i.e., the amount of exhaustion or the amount of input) of an electrode sheet. For example, the coordinate data and the measurement and/or inspection data may be acquired as time series data, respectively, and coordinate data and measurement and/or inspection data acquired at the same time point may be associated with each other.

Battery manufacturing involves a series of different processes, and a leading or previous process affects the following process. In this case, it is difficult to reflect time series data of the leading process in the following process when the time series data of the leading process does not directly match a real-world workpiece, an intermediate product, and a product. Hereinafter, correcting the following process on the basis of data generated according to a result of the leading process will be referred to as feedforward.

Here, the workpiece is an article provided as a result of each sub-process, e.g., an electrode sheet on which the coating process, the roll press process, the slitting process, and the notching process are performed. The intermediate product may include separators, sectional electrodes, and/or assemblies thereof that are cut in the lamination process. The intermediate product may be a structure including a housing and an electrode assembly included in the housing (in some cases, the structure further includes an electrolyte). The product is an article processed by the activation process to be operable as a battery. The above-described definitions of the workpiece, the intermediate product, and the product are definitions thereof only in one aspect and thus should not be understood as excluding general definitions thereof.

Generally, process events occur as a result of performing processes and thus data thereof is time series data. Accordingly, the data of the process events may include values indicating the events and time values matching the values, i.e., time values at which the respective process event occurred. Accordingly, the data of the process events may be time series data.

For feedforward, time series data should be related to positions on real-world workpieces, components, intermediate products, and products. Here, the feedforward may include controlling processing of an electrode sheet, based on a roll map generated in a previous process. The roll map may allow time series data to be connected with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforward based on generation of the roll map and the roll map may improve productivity and quality by digitizing and objectifying aspects of a process that depend on an operator's discretion.

A roll map of a preceding lot may be used to improve a process for a subsequent lot, and this behavior may be referred to as process feedback. The process feedback using the roll map may include identifying process conditions and process parameters that have caused problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include an electrode ID of a sectional electrode included in an electrode assembly or an upper ID formed on the electrode assembly or a housing. The IDs may include or be associated with lot numbers and coordinate information of sectional electrodes and a separator included in the battery cell. In other words, the IDs may be related to a roll map of the sectional electrodes and the separator included in the battery cell. Accordingly, when an event such as a quality issue occurs in a battery cell on the market, history data of manufacturing the battery cell may be retrieved based on the IDs.

The FCDS 1221 may include at least one of electrode lot data (ELD) 1231 indicating an electrode material, processed data of inspection data and/or measurement data, or raw data of the inspection data and/or the measurement data.

The ELD 1231 may include data of specifications of a lot, i.e., the electrode material. The specifications of the lot may include, for example, a lot number, a length of a wound sheet material (SM), a width of the SM, materials used to process the SM, and a composition of the materials.

The FCDS 1221 may include the processed data of the inspection data and/or the measurement data. The amount of inspection data and/or measurement data received from a controller of each process equipment accumulates rapidly over time. Thus, such vast amounts of data cannot be continuously stored in a process controller for performing a process. Accordingly, it is necessary to process inspection data and/or measurement data to reduce the amount of data. For example, a processor of the inspector and/or a processor of the measuring device may compress the inspection data or the measurement data to generate compressed inspection data or measurement data. The compressed inspection data and/or measurement data may include a representative value of inspection data and/or measurement data of each of a plurality of sections of the electrode sheet ES. In addition, the representative value of the inspection data and/or the measurement data may be related to a representative value of coordinate data CD of each of the plurality of sections. The representative value of the inspection data and/or the representative value of the measurement data of each of the plurality of sections of the electrode sheet ES may include at least one of an average, a standard deviation, a measurement data, a maximum value, or a minimum value of the inspection data and/or the measurement data of each of the plurality of sections. The representative value of the coordinate data of each of the plurality of sections of the electrode sheet ES may include a start coordinate and an end coordinate of each of the plurality of sections.

In addition, the processor of the inspector and/or the processor of the measuring device may be configured to generate evaluation data including a judgement value of each of the plurality of sections of the electrode sheet ES, based on at least one of coordinate-related inspection data CID and/or measurement data CMD, and the compressed inspection data and/or measurement data. The judgement value of each of the plurality of sections may be determined based on a set range and a comparison between an inspection value and/or a measurement value (or representative value).

The monitoring system of the battery manufacturing system 10 may further include the third server 1230 that generates an FCDS-1 1232, in which the processed data of the inspection data and/or the measurement data or some of the processed data is connected or associated with the coordinate data, and transmits the FCDS-1 1232 to the second server 1220. In the present example, for the efficiency of data processing and transmission, not all inspection data or measurement data obtained by the inspector or the measuring device is transmitted to the second server 1220 through the controller of each process and the EIF 1100. Instead, only either the processed data of the inspection data and/or the measurement data or a subset of the processed data may be connected with coordinate data, and transmitted to the third server 1230. The third server 1230 may generate the FCDS-1 based on the connected data. Since the processed data of the inspection data and/or the measurement data or only a subset thereof is connected with coordinate data in the FCDS-1, the FCDS-1 has a decreased size compared to the data generated by the process controllers. Since the FCDS-1 is transmitted to the third server 1230, the computational recourses required for processing these data can be reduced. The FCDS-1 may include the ELD 1231 described above.

The FCDS-1 1232 transmitted from the third server 1230 to the second server 1220 may be integrated into the first FCDS 1221 in the second server 1220.

Meanwhile, raw data of inspection data ID and/or measurement data MD may be stored in a separate server, e.g., an eIoT 1150. Raw data obtained by the inspector or the measuring device may be transmitted to a separate server, and transmitted from the separate server to the second server 1220. The second server 1220 may generate the FCDS 1221 by integrating the FCDS-1 1232 transmitted from the third server 1230 with the raw data.

The raw data may be related to time series data at a point in time when the raw data has been obtained and/or coordinate data of a position at which the raw data has been obtained. The second server 1220 may map (integrate) the raw data with the coordinate data of the FCDS-1 and the processed data of the inspection data and/or the measurement data through the time series data. For example, the second server 1220 may associate raw data obtained at a specific coordinate value or at a specific time point with data of the FCDS-1 obtained at the same coordinate value or time point.

The first server 1210 includes or stores the IDS 1213 including the electrode ID EID identifying the sectional electrode.

As described above, the electrode ID EID is assigned in the notching process of forming a tab on the electrode (sheet). The sectional electrode (e.g., a negative electrode) with the electrode ID EID may be coupled to another sectional electrode (e.g., a positive electrode) in the lamination process.

The IDS 1213 may further include at least one of:

1) first electrode ID-related data EIDD1 including coordinates of the sectional electrode corresponding to the electrode ID EID in the sub-process in which the electrode ID EID is assigned among the plurality of sub-processes;

2) second electrode ID-related data EIDD2 including at least one of the coordinates of the sectional electrode corresponding to the electrode ID EID or coordinates of another sectional electrode coupled to the electrode and corresponding to the electrode ID EID in the sub-process in which the sectional electrode is coupled to the other sectional electrodes among the plurality of sub-processes; and

3) pitch data PD indicating a length of the sectional electrode and/or a length of the other sectional electrode coupled to the electrode.

As described above, the sub-process in which the electrode ID EID is assigned may be, for example, the notching process. In the notching process, electrode IDs EID may be assigned to electrode tabs, which are formed by notching, by an ID marker. Each of the electrode IDs EID may correspond to coordinates representing a position of a corresponding sectional electrode on the electrode (sheet) in the notching process. For example, the coordinates of a respective electrode tab on which the electrode ID is marked may be considered as the coordinates of the respective electrode ID. The notching controller 440 of the notching device 400 may collect the electrode IDs EID by, for example, an electrode ID reader. In addition, the first electrode ID-related data EIDD1 including the coordinates of the sectional electrode corresponding to the electrode ID may be collected. The first electrode ID-related data EIDD1 may include inspection data and/or measurement data in a notching process that correspond to the electrode ID and the coordinates.

The notching controller 440 may also store pitch data PD indicating the length of the notched electrode.

The notching controller 440 transmits the pitch data PD, the electrode ID EID, and the first electrode ID-related data EIDD1 to the fourth server 1240 which may be a management server dedicated to electrode IDs.

In a process (the lamination process) of combining the sectional electrode and other sectional electrodes among the plurality of sub-processes, the sectional electrode (e.g., a negative electrode) with the electrode ID and another sectional electrode (e.g., a positive electrode) are cut by a cutter and coupled to each other with a separator interposed therebetween. In this case, electrode IDs are collected by an electrode ID reader and transmitted to the lamination controller 540. In addition, coordinates of the sectional electrode with the electrode ID in the lamination process and coordinates of the other sectional electrode coupled to the sectional electrode and corresponding to the electrode ID may be collected by the lamination controller 540. Therefore, the second electrode ID-related data EIDD2 including the coordinates of the sectional electrode corresponding to the electrode ID EID in the lamination process and the coordinates of the other sectional electrode coupled to the sectional electrode and corresponding to the electrode ID EID may be collected by the lamination controller 540. The second electrode ID-related data EIDD2 may include inspection data and/or measurement data in the lamination process that correspond to the electrode ID and the coordinates.

Pitch data PD regarding a length of the sectional electrode with the electrode ID and a length of the other sectional electrode coupled to the electrode is stored in the lamination controller 540.

The lamination controller 540 transmits the pitch data PD, the electrode ID EID, and the second electrode ID-related data EIDD2 to the fourth server 1240 which is a management server dedicated to electrode IDs.

The fourth server 1240 may generate an IDS 1241 that includes the pitch data PD, the electrode ID EID, the first electrode ID-related data EIDD1, and the second electrode ID-related data EIDD2. The fourth server 1240 may upload the generated IDS 1241 to the first server 1210 at certain periods of time, for example, in regular intervals.

The third server 1230 may, for example, be a data processing system that supports all activities necessary to manage the manufacturing of batteries, such as work schedule management, work instructions, quality control, and work performance tally. The third server 1230 serving as the data processing system may include, e.g., a manufacturing execution system (MES). The MES may be configured to perform inputting, processing, outputting, and communication of data necessary to manufacture electrodes, e.g., the coating process and a press process, and a lamination process.

The second server 1220 may be configured to store and process raw inspection data and/or measurement data. The second server 1220 may manage the quality of processing the electrode sheet by continuously monitoring the processing of the electrode sheet on the basis of the inspection data and/or measurement data. To this end, the second server 1220 may be or include a statistical process controller (SPC) that is an upper data processing system. The SPC may collect and analyze manufacturing data in almost real time to identify problem conditions in a timely manner and provide alarm to an operator before potential problems occur.

The first server 1210, for example, may be or include, for example, a data warehouse that is a higher data processing system. The data warehouse may store a roll map for a long period of time, based on a quality warranty period of a product or the like.

The first server 1210 may generate a visualization command to visualize a roll map. The first server 1210 may transmit the visualization command to the display device 1300, and the display device 1300 may visualize and display the roll map. Alternatively, the second server 1220 and the third server 1230 may each generate a visualization command to visualize a roll map, which is generated in an operation corresponding to each server, on the display device 1300.

The monitoring system of the battery manufacturing system 10 may include a memory 1420 storing instructions, and one or more processors 1410 configured to execute the instructions to perform operations of:

1) associating an electrode ID EID selected from the IDS 1213 with coordinate data CD of the FCDS 1221 corresponding to the selected electrode ID EID; and

2) generating monitoring data on a battery manufacturing process, based on the coordinate data associated with the electrode ID EID.

Referring to FIG. 3, the monitoring system may include a processor (or processors) 1410 (e.g., a CPU, a GPU, or another processing device) configured for communicating with other devices, and a memory 1420. The system 10 may further include a communication interface (or communication interfaces) 1440 (e.g., a network interface).

Instructions (commands) executable by one or more processors 1410 may be stored in a non-transitory computer-readable medium. Examples of the non-transitory computer-readable medium include RAM, ROM, solid-state storage media, optical storage media, and magnetic storage media. The non-transitory computer-readable medium may be a part of a memory of a computing device or may be provided separately from the computing device.

The memory 1420 may include a volatile memory such as RAM and/or a nonvolatile memory such as a ROM and a storage medium. Examples of the storage medium include solid-state storage media (e.g., solid state drives and/or removable flash memories), optical storage media (e.g., optical disks), and magnetic storage media (e.g., hard disk drives). The above-described instructions (e.g., software or computer readable code) may be stored in a volatile component and/or a nonvolatile component of the memory 1420. monitoring system may further include an input device (or input devices) 1450 and an output device (or output devices) 1460. For example, a keyboard, a mouse, a joystick or a touch screen may be used as an input device. For example, a display, a head-up display, an AR display, a VR display or a printer may be used as an output device. The above-described components of the battery manufacturing system 10 may be connected to each other through one or more buses 1430. It may be possible that the processor 1410 includes both a CPU and a GPU.

A process described here is implementable by one or more processors 1410 in the computing system as shown in FIG. 3. A process performed by the one or more processors 1410 may also be referred to as an operation. One or more processors may be configured to perform such a process by accessing instructions to perform the process. The instructions may be stored in the memory 1420. When the one or more processors 1410 are embodied as a plurality of processors, the plurality of processors may be included in a single computing device or be distributed in a plurality of computing devices. A computing device that includes the processor 1410 and the memory 142 may be physically coupled to the inside of the first server 1210 or be physically separated from the first server 1210 and included in separate devices.

The first server 1210 stores the FCDS 1211 transmitted from the second server 1220 and the IDS 1213 transmitted from the fourth server 1240. The processor 1410 executes instructions to perform operations of:

1) connecting, or associating, an electrode ID EID selected from the IDS 1213 with coordinate data CD of the FCDS 1211 corresponding to the selected electrode ID EID; and

2) generating monitoring data on the battery manufacturing process based on the coordinate data associated with the electrode ID.

As described above, the FCDS 1221 includes coordinate data CD indicating lengthwise positions on the electrode (sheet) in each of the plurality of processes, and inspection data and/or measurement data CID/CMD related to the coordinate data CD. An electrode ID is related to corresponding coordinates in the notching process and the lamination process. Therefore, a position of a sectional electrode to be tracked may be specified between a plurality of processes by connecting the coordinates in the notching process and the lamination process and the electrode ID with coordinate data CD of an FCDS. That is, a position of a sectional electrode, a quality issue of which has occurred may be specified by mapping an electrode ID EID of the same real or sectional electrode with coordinate data CD in a plurality of processes corresponding thereto. Accordingly, a position of the sectional electrode may be identified, for example, in each of the coating process, the roll press process, the slitting process, the notching process, and the lamination process. The FCDS 1221 includes inspection data and/or measurement data CID/CMD of each sectional electrode related to the coordinate data and thus allows inspection characteristics and/or measurement characteristics of each sectional electrode corresponding to coordinate data of each process to be identified.

For example, positions of a negative electrode in the coating process, the roll press process, the slitting process, the notching process, and the lamination process may be identified by connecting an electrode ID of the negative electrode with coordinate data CD of each process corresponding thereto.

In addition, monitoring data for manufacturing a battery may be generated based data of the connection of the electrode ID EID and the coordinate data CD.

For example, in the lamination process, coordinate data of a positive electrode coupled to the negative electrode may be identified. When an FCDS as described above is constructed for the positive electrode, positions of the positive electrode in the coating process, the roll press process, the slitting process, the notching process, and the lamination process may be identified. FIG. 2 illustrates generating the FCDS 1221 for the other sectional electrode (e.g., a positive electrode) by transmitting coordinate-related inspection data CID'1, CID'2, CID'3, and CID'4 and measurement data CMD'1, CMD'2, CMD'3, and CMD'4 to the third server 1230 and the second server 1220 from the controller 140' of the coating process, the controller 240' of the roll press process, the controller 340' of the slitting process, and the controller 440' of the notching process of the other electrode through the EIF 110.

The first server 1210 may identify inspection characteristics and/or measurement characteristics of each of the negative electrode and the positive electrode corresponding to coordinate data of each process of the negative electrode and the positive electrode related to the coordinate data through the FCDS 1211 of the positive electrode and the negative electrode. Accordingly, the first server 1210 may generate various types of monitoring data on the manufacture of a battery in each process or between processes by specifying positions (coordinate data) of the positive electrode and the negative electrodes corresponding to the electrode ID and points in time when the inspection data and/or measurement data has been obtained (time series data). For example, a roll map (a roll map data set) representing characteristics of real-electrode materials may be visualized and displayed in a graphical user interface, based on the coordinate data. For example, the first server 1210 may represent a roll map of the coating process, a roll map of the roll press process, a roll map of the slitting process, a roll map of the notching process, and a roll map of the lamination process in relation to a position of each electrode corresponding to an electrode ID. In addition, roll maps of a negative electrode and a positive electrode each having coordinates corresponding to the electrode ID may be implemented and monitored in a graphical interface. The monitoring data is not limited to the generation of roll map data. For example, the monitoring data may be data processed by remodeling inspection data or measurement data, which is related to quality, in the form of graphs, charts, or three-dimensional representations, based on data of connection of the electrode ID and the coordinate data. The monitoring data may include all types of data generated, processed, modified, and utilized for manufacture of a battery, based on data in the FCDS and the IDS 1213 described above.

Optionally, the first server 1210 may further be configured to store at least one of:

1) an equipment data set (EDS) 1214 obtained from a process equipment physically interacting with the electrode and/or the sectional electrode during any one of the plurality of sub-processes; or

2) a quality data set (QDS) 1215 related to the quality of an electrode among inspection data and/or measurement data.

As described above, each of the plurality of pieces of process equipment includes a process controller. A controller of each process may collect, for example, critical-to-parameter (CTP) data related to quality. The CTP data is principle parameter data related to quality among pieces of equipment data.

For example, in the coating process, a pressure, speed, and feed rate of a slurry pump may be CTP data. Because the slurry pump is controlled by the controller of the coating process, data about the pressure, speed, and feed rate of the slurry pump is collected or stored in the controller of the coating process. Alternatively, a temperature or pressure in the coating process may be CTP data. All of the above-described data is obtained by each process equipment (process controller) and therefore is included in equipment data ED. The equipment data ED may also include data about the specifications of equipment such as various types of mechanical devices, machines, etc. that perform a corresponding process.

For example, in the roll press process, roll pressing pressure (press hydraulic pressure) may be CTP data. In addition, the process controller of each of the slitting process, the notching process, and the lamination process may obtain a type of equipment data corresponding thereto.

As described above, various types of equipment data ED may be collected in the various sub-processes.

The equipment data ED, e.g., CTP data, may be transmitted from each process equipment, e.g., a process controller, to a server such as the eIoT 1150. The eIoT server 1150 may upload the equipment data ED to the first server 1210. Thus, the first server 1210 may further store the EDS 1214.

As described above, the eIoT server 1150 transmits raw data ID/MD of coordinate-related inspection data CID and/or measurement data CMD obtained in each process to the second server 1220. In addition, the eIoT server 1150 may transmit the equipment data ED to the first server 1210.

The processor 1410 may be configured to execute an instruction to connect or associate an electrode ID and coordinate data on the basis of data extracted from the FCDS 1211 and the IDS 1213 of the first server 1210 and generate monitoring data based on the extracted data. In this case, an operation of matching the monitoring data with equipment data ED related to the electrode ID and/or the coordinate data or including the equipment data ED in the monitoring data may be performed. For example, equipment data may be connected with coordinate data obtained at a point in time corresponding to a point in time when the equipment data was obtained based on time series data. In this case, inspection data and/or measurement data related to the coordinate data may also be connected with the equipment data. Accordingly, more comprehensive monitoring data including the equipment data may be generated by the first server 1210.

Alternatively, the equipment data may include data related to coordinate data. Equipment data related to coordinates may be connected with inspection data and/or measurement data related to the electrode ID and/or the coordinate data, based on the coordinates (data).

Meanwhile, the inspection data and/or the measurement data may include quality data QD related to the quality of the electrode. For example, critical-to-quality (CTQ) data, which is critical data related to quality, may be collected as quality data.

Processed data or raw data of the inspection data and/or the measurement data may be included in the FCDS 1221 generated by the second server 1220. The second server 1220 may be configured to store a data set of the inspection data and/or the measurement data separately from the FCDS 1221 such as a roll map data set. Such inspection data and/or measurement data may be uploaded to the first server 1210 while being included in the FCDS 1221 or as being a separate data set. The processor 1410 may be configured to execute instructions to perform operations of extracting the QDS 1215 related to quality from the inspection data and/or the measurement data uploaded to the first server 1210. Thus, for example, a CTQ data set may be extracted. For example, data about a coating thickness or coating width in the coating process may be CTQ data in the coating process. In the roll press process, data about a rolling thickness or the like may be CTQ data. Corresponding quality data, e.g., CTQ data, may also be collected in the slitting process, the notching process, and the lamination process.

The processor 1410 is configured to execute an instruction to connect an electrode ID and coordinate data on the basis of data extracted from the FCDS 1211 and the IDS 1213 stored in the first server 1210 and generate monitoring data based on the extracted data. In this case, an operation of extracting quality data related to the electrode ID and/or the coordinate data from the QDS 1215 and matching the quality data with the monitoring data or including the quality data in the monitoring data may be performed. For example, quality data may be connected with coordinate data obtained at a point in time corresponding to a point in time when the equipment data was obtained based on time series data. In this case, other inspection data and/or measurement data related to the coordinate data may also be connected with the quality data. Accordingly, more comprehensive monitoring data including the quality data can be generated by the first server 1210.

Generally, the quality data may also associated with coordinate data. Thus, equipment data associated with coordinates may be connected or associated with various inspection data and/or measurement data related to the electrode ID and/or the coordinate data, based on the coordinates (data).

Optionally, the first server 1210 may further store a second coordinate-related data set (SCDS) 1212 in which processed coordinate data obtained by processing coordinate data CD of each of the sub-processes to correspond to an identical physical position on the electrode (sheet) is connected with inspection data and/or measurement data of each of the sub-processes. The SCDS 1212 may be generated by the second server 1220, similar to the FCDS 1221.

As described above, the coordinate data CD of the FCDS 1211 may be connected or associated with the electrode ID EID of the IDS 1213.

However, actually, coordinates of coordinate data obtained in a respective one of the sub-processes may be different from those of coordinate data obtained in another one of the sub-processes. For example, in a roll-to-roll process, an electrode roll wound in a previous process may be unwound in a subsequent process and thus positions of the start and end of the electrode roll in the previous process are inverted in the subsequent process. In addition, a top surface and a back surface of an electrode in a previous process may be inverted in a subsequent process according to a direction in which the electrode is wound and a direction in which the electrode is unwound. For example, in the case of a double-sided electrode, both sides of which are coated with an electrode active material, a top electrode in a previous process may be inverted as a back electrode in a subsequent process, i.e., a surface of the electrode may be inverted. In addition, a part of the electrode may be deleted, i.e., electrode loss may occur, in each of processes or between the processes. The electrode may be cut and connected several times by removing defective or broken sections while undergoing a series of roll-to-roll processes, thus causing a change of a length of the electrode. Such changes occurring during multiple processes for manufacturing the electrode make it difficult to directly apply coordinate data, which is obtained from each of the multiple processes, between processes.

Thus, when the coordinate data of the FCDS 1211 is connected with an electrode ID, an operation should be performed on coordinate data of each of the sub-processes to correspond to a position (coordinates) of the electrode ID of a corresponding sectional electrode on the electrode (sheet) while reflecting the changes occurring between the processes. For the operation, the monitoring system of the battery manufacturing system 10 may include a separate computing device.

For example, the SCDS 1222, which is calculated while reflecting the changes in advance, may be uploaded from the second server 1220 to the first server 1210 at certain, optionally regular intervals of time. That is, the first server 1210 may store an SCDS including processed coordinate data calculated (processed) in advance to correspond to the coordinate data of each of the sub-processes, thus eliminating the need for a separate computing device. The processed coordinate data may be obtained by matching the coordinate data in respective ones of the plurality of sub-processes with each other such that they indicate identical physical parts of the electrode.

Optionally, monitoring data between a plurality of sub-processes may be generated using second coordinate-related data in which the processed coordinate data of the SCDS and inspection data and/or measurement data of each of the processes are connected. For example, processed coordinate data of each process related with a certain electrode ID obtained from an identification data set may be obtained. The processor 1410 may execute instructions to perform operations, including connecting or associating the processed coordinate data with an electrode ID selected from the identification data set.

Further optionally, in the generating of the monitoring data, inter-process monitoring data may be generated by comparing or mapping inspection data and/or measurement data of a one of the sub-processes, which is related with the electrode ID and the processed coordinate data, between a plurality of processes. This may include mapping the processed coordinate data in one of the sub-processes, associated with the electrode ID, with processed coordinate data in another one of the sub-processes, associated with the electrode ID. Additionally, or alternatively, inspection data and/or measurement data obtained in one of the sub-processes, associated with the electrode ID or the processed coordinate data, may be mapped with inspection data and/or measurement data obtained in another one of the sub-processes, associated with the electrode ID or the processed coordinate data.

For example, equipment data (e.g. CTP data) or quality data (e.g. CTQ data) of a corresponding process may be extracted from the EDS 1214 and the QDS 1215 stored in the first server 1210 and may be included in the inter-process monitoring data. Accordingly, more comprehensive monitoring data between a plurality of processes may be generated.

To this end, the processor 1410 may further execute instructions to connect the coordinate data and/or the processed coordinate data related to the electrode ID with the equipment data ED and/or the quality data QD. In the generating of the monitoring data, monitoring data may be generated based on data about the connection of the electrode ID, the coordinate data and/or the processed coordinate data, and the equipment data and/or the quality data.

The processed coordinate data of each process may be associated with coordinates included in the first electrode ID-related data and/or the second electrode ID-related data through the electrode ID. For example, processed coordinate data of the coating process, the roll press process, and the slitting process may be related to first electrode ID-related data EIDD1 that includes an electrode ID EID of the notching process and coordinates in the notching process corresponding to the electrode ID EID. Thus, the quality of a certain electrode may be easily managed or tracked between the notching process and a plurality of preceding processes, based on the electrode ID.

Alternatively or additionally, the processed coordinate data of the coating process, the roll press process, the slitting process, and the notching process may be associated with at least one of an electrode ID in the lamination process, coordinates of the electrode in the lamination process corresponding to the electrode ID, or coordinates of another electrode coupled to the electrode and corresponding to the electrode ID. Thus, the quality of a certain electrode may be easily managed or tracked between the lamination process and a plurality of preceding processes, based on the electrode ID.

Meanwhile, the second server 1220 may generate processed coordinate data of each sub-process corresponding to an identical physical position of the electrode (sheet) by processing the coordinate data CD of the FCDS 1221. To this end, a memory storing instructions to perform operations related to the above-described processing and one or more processors configured to execute the instructions may be provided in the second server 1220 or separately from the second server 1220.

The coordinate data may be processed into the processed coordinate data by at least one of:

1) when the coordinate data is inverted due to the inversion of positions of the start and end of an electrode (sheet) between processes, correcting the inverted coordinate data to be the same between the sub-processes;

2) when the coordinate data is inverted due to the inversion of a corresponding surface of the electrode (sheet) between processes according to a direction in which the electrode (sheet) is wound and a direction in which the electrode is unwound, correcting the inverted coordinate data to be the same between the sub-processes; and

3) when the coordinate data changes due to an electrode loss occurring in each of the sub-processes and/or between the sub-processes, correcting the changed coordinate data between the sub-processes.

The operation of processing the coordinate data while reflecting top/back inversion, surface inversion, or an electrode loss described above will be described in detail below.

Similar to the FCDS 1211, the SCDS 1222 may also be a roll map data set indicating characteristics of a real electrode material on the basis of coordinate data or processed coordinate data or may include the roll map data set.

For example, when the FCDS 1211 includes a roll map of an individual process related to coordinate data of the individual process and inspection data and/or measurement data of the individual process, the SCDS 1222 may include roll maps of multiple individual processes related to processed coordinate data of the individual process and inspection data and/or measurement data of the individual process, wherein, in the processed coordinate data, the coordinate data of each of the multiple individual processes are matched such that they indicate identical physical parts of the electrode (sheet). According to the latter SCDS 1222, a position in each process corresponding to the same physical portion of the electrode, e.g., a part corresponding to the same sectional electrode or the same electrode ID, may be intuitively identified, based on the processed coordinate data. Accordingly, various types of data related to the position (e.g., inspection data, measurement data, equipment data, quality data, first electrode ID-related data, and second electrode ID-related data) may be freely mapped. Therefore, because the first server 1210 stores the SCDS 1212, data about the quality of electrodes may be quickly retrieved based on the electrode ID in a plurality of processes (including an assembly process) of manufacturing electrodes.

Meanwhile, each data set stored in the first server 1210 may further include time series data indicating a point in time when data included in each data set has been obtained. In addition, the data included in each data set may be related to corresponding time series data. Accordingly, the data included in each data set may be retrieved, connected, corresponded, mapped, combined, processed, and utilized based on coordinate data, time series data or both the coordinate data and the time series data.

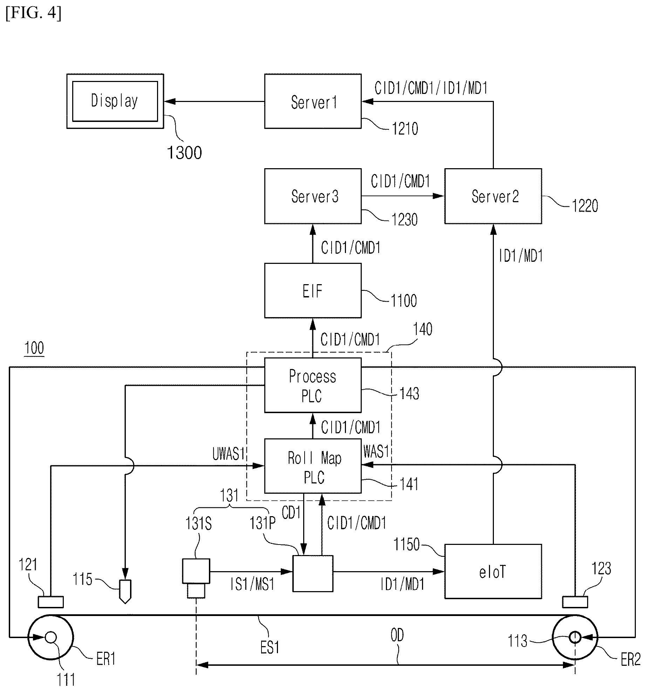

FIG. 4 exemplarily illustrates a coating device.

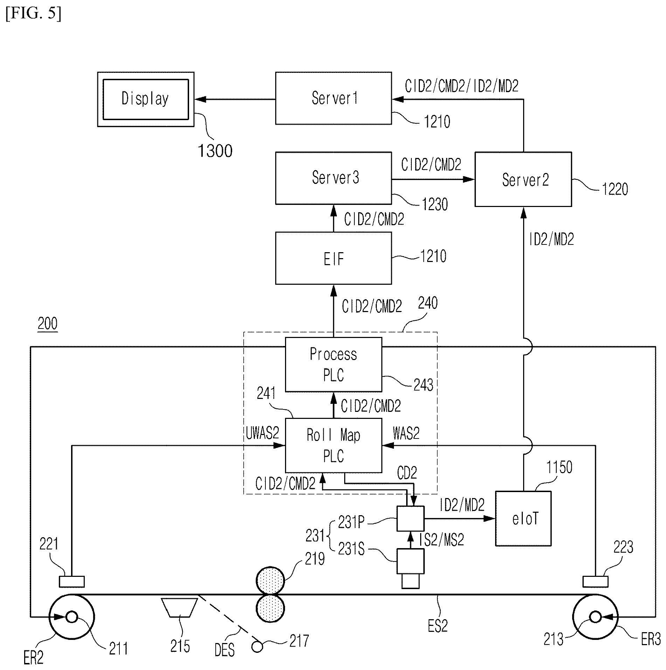

FIG. 5 exemplarily illustrates a roll pressing device.

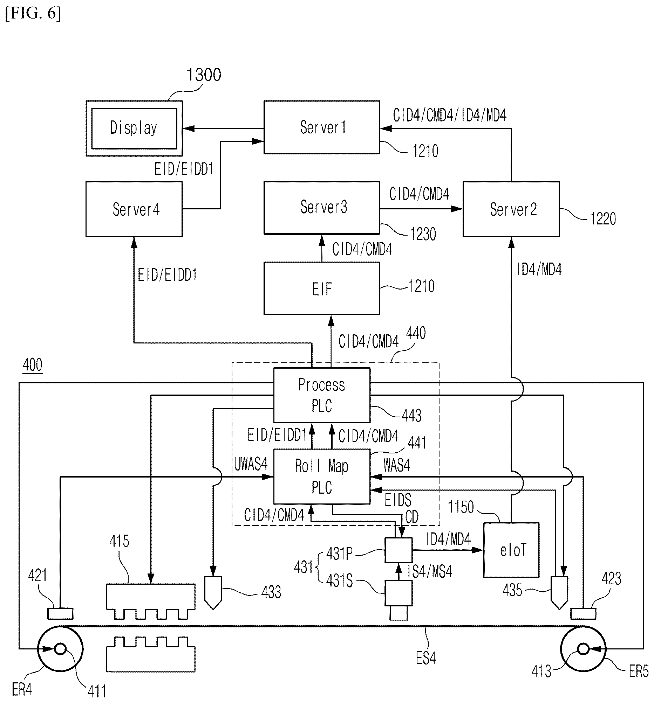

FIG. 6 exemplarily illustrates a notching device.

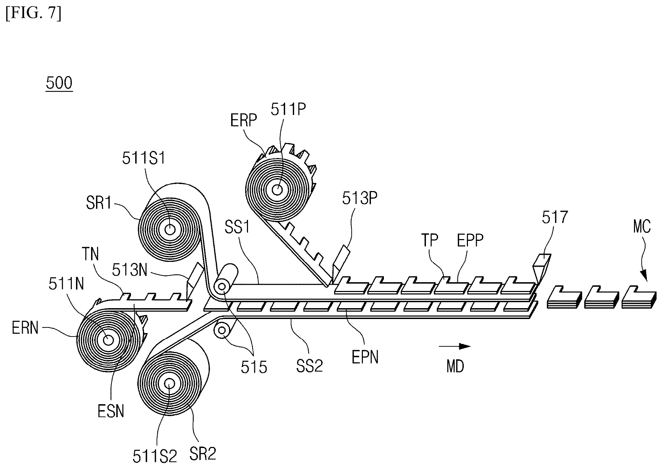

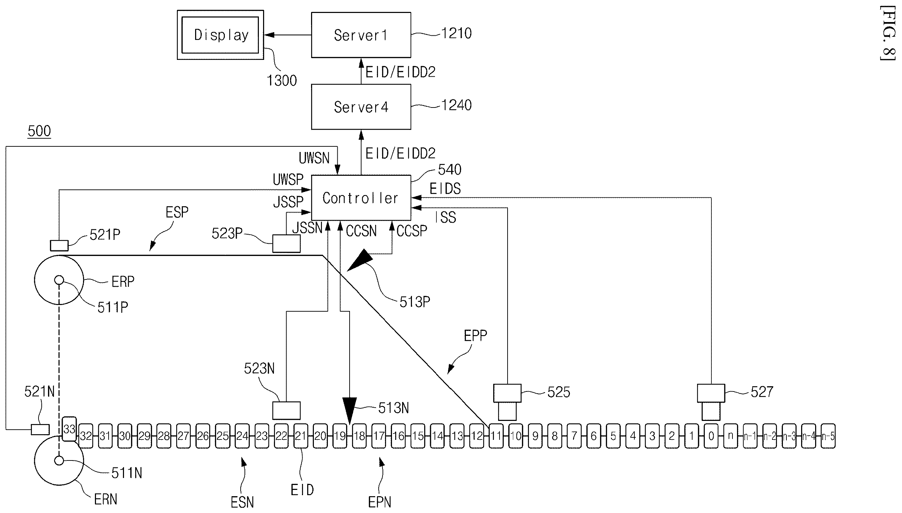

FIGS. 7 and 8 exemplarily illustrate a lamination device.

A process of constructing a data set in each process will be described with reference to FIGS. 4 to 8 below.

Referring to FIG. 4, a coating device 100 may include an unwinder 111, a rewinder 113, a coater 115, a first rotary encoder 121, a second rotary encoder 123, an inspection and/or measuring device 131, a roll map PLC 141, and a process PLC 143. The coating device 100 may be data-communicatively connected to a server system, including the third server 1230, the second server 1220, and the first server 1210, through the EIF 1100. The coating device 100 may also be data-communicatively connected to the eIoT 1150 that is a separate server. An entire configuration including the coating device 100 and the servers may form part of the battery manufacturing system 10 and may be referred to as a coating roll map generation system.

A first electrode roll ER1 may be loaded on the unwinder 111. The unwinder 111 may be configured to unwind a first electrode sheet ES1 from the first electrode roll ER1. The rewinder 113 may be configured to wind the first electrode sheet ES1 around a second electrode roll ER2. The first electrode sheet ES1 may be wound around the second electrode roll ER2 and be cut and separated after a certain winding length is reached. Accordingly, the first electrode sheet ES1 may be moved between the unwinder 111 and the rewinder 113.

The first rotary encoder 121 may be configured to detect an amount of the first electrode sheet ES1 unwound from the first electrode roll ER1 by the unwinder 111. Accordingly, the first rotary encoder 121 may be configured to generate an input amount signal UWAS1 indicating a length of the first electrode sheet ES1 unwound by the unwinder 111. The first rotary encoder 121 may be configured to transmit the input amount signal UWAS1 to the roll map PLC 141.

The second rotary encoder 123 may be configured to detect an amount of the first electrode sheet ES1 wound around the second electrode roll ER2 by the rewinder 113. Accordingly, the second rotary encoder 123 may be configured to generate an exhaustion amount signal WAS1 indicating a length of the first electrode sheet ES1 wound by the rewinder 113. The second rotary encoder 123 may be configured to transmit the exhaustion amount signal WAS1 to the roll map PLC 141.

The die coater 115 may be configured to coat the first electrode sheet ES1 with an electrode slurry containing an active material. When the first electrode sheet ES1 is a positive electrode current collector, an electrode slurry containing a positive electrode active material may be provided on the first electrode sheet ES1, and when the first electrode sheet ES1 is a negative electrode current collector, an electrode slurry containing a negative electrode active material may be provided on the first electrode sheet ES1.

The roll map PLC 141 may be configured to collect or acquire coordinate data CD1 of the first electrode sheet ES1, based on the exhaustion amount signal WAS1 and/or the input amount signal UWAS1 of the first electrode sheet ES1. For example, the roll map PLC 141 may determine a moving distance of the first electrode sheet ES1, based on the input amount signal UWAS1 of the first electrode sheet ES1. Accordingly, the roll map PLC 141 may be configured to determine a position of a part of the first electrode sheet ES1, which is unwound by the unwinder 111, on the first electrode sheet ES1 at each point in time, e.g., at a point of time when an event occurs in the first electrode sheet ES1.

As another example, the roll map PLC 141 may determine a moving distance of the first electrode sheet ES1, based on the exhaustion amount signal WAS1 of the first electrode sheet ES1. Accordingly, the roll map PLC 141 may be configured to determine a position of a part of the first electrode sheet ES1, which is wound by the rewinder 113, on the first electrode sheet ES1 at each point in time, e.g., at a point of time when an event occurs in the first electrode sheet ES1. As another example, the roll map PLC 141 may determine a moving distance of the first electrode sheet ES1, based on each of the exhaustion amount signal WAS1 and the input amount signal UWAS1 of the first electrode sheet ES1.

Hereinafter, as a non-limiting example, the present invention will be described with reference to an example in which the roll map PLC 141 collects coordinate data CD1 on the basis of the exhaustion amount signal WAS 1 of the first electrode sheet ES1.

The coordinate data CD1 may include coordinates matching or indicating each portion of the first electrode sheet ES1. That is, arbitrary points on the first electrode sheet ES1 may match the coordinates. The coordinates may be a one-dimensional quantity in a direction of movement of the first electrode sheet ES1. That is, the coordinates may indicate length positions on the electrode sheet ES1 but they are not limited thereto. The coordinates may be a two-dimensional quantity in of the direction of movement and a transverse direction of the first electrode sheet ES1.

The inspection and/or measuring device 131 may be configured to inspect or measure the first electrode sheet ES1. The inspection and/or measuring device 131 may be an inspector, a measuring device, or an inspection and measuring device. A plurality of inspection and/or measuring devices 131 may be provided. In the present specification, it is assumed that for convenience of description, only one inspection and/or measuring device is provided to obtain both inspection data and measurement data. Alternatively, inspection data may be obtained by an inspector, and measurement data may be obtained by a measuring device.

For example, the inspection and/or measuring device 131 may be a vision inspector or a loading amount meter. The inspection and/or measuring device 131 may inspect and/or measure the first electrode sheet ES1 in a scanning manner. For example, the inspection and/or measuring device 131 may move in a width direction of the first electrode sheet ES1. The inspection and/or measuring device 131 may include a sensing part 131S and a processor 131P. The sensing part 131S and the processor 131P may be connected by wire or wirelessly. The sensing part 131S may be configured to detect a physical quantity of the first electrode sheet ES1 to generate an inspection and/or measurement signal IS1/MS1.

For example, the sensing part 131S may include an imaging device such as a time delay and integration (TDI) camera or a complementary metal oxide semiconductor (CMOS) image sensor. The sensing part 131S may be configured to transmit the inspection and/or measurement signal IS1/MS1 to the processor 131P. The inspection and or measurement signal IS1/MS1 may include, for example, an image of a surface of the first electrode sheet ES1.

The processor 131P may be configured to collect the inspection and/or measurement signal IS1/MS1 generated by the sensing part 131S to generate inspection and/or measurement data. The processor 131P may be configured to collect the coordinate-related inspection and/or measurement data CID1/CMD1, based on the inspection and/or measurement signal IS1/MS1 and the coordinate data CD1. The processor 131P may be configured to transmit the coordinate-related inspection and/or measurement data CID1/CMD1 to the roll map PLC 141. The coordinate-related inspection and/or measurement data CID1/CMD1 or time series data-related inspection and/or measurement data ID1/MD1 may, for example, be transmitted from the processor 131P to the eIoT 1150. In addition, the coordinate-related inspection and/or measurement data CID1/CMD1 or the time series data-related inspection and/or measurement data ID1/MD1 may be transmitted from the eIoT 1150 to the second server 122. In terms of data capacity and processing, data transmitted from the processor 131P to the eIoT 1150 are raw data of inspection data and/or measurement data or a large amount of data. Only processed data of the inspection data and/or measurement data or some of the processed data may be transmitted from the processor 131P to the roll map PLC 141.

The roll map PLC 141 may be in operative communication with the first and second rotary encoders 121 and 123, and the inspection and/or measuring device 131 through a wired or wireless data network. The data network may be unidirectional or bidirectional. The data network may be implemented by a public network and/or a specialized network using physical channels, WiFi, Bluetooth, and/or other frequency bands. The first and second rotary encoders 121 and 123, and the inspection and or measuring device 131 may be configured to collect data from equipment in a coating device, workpieces, intermediate products, and products or to generate a signal for collecting data.

The roll map PLC 141 may be configured to transmit the coordinate data CD1 to the processor 131P. The processor 131P may be configured to connect the coordinate data CD1 with inspection and/or measurement data to generate the coordinate-related inspection and/or measurement data CID1/CMD1. In general, the inspection and/or measurement data may be processed based on a trigger point. An example of processing inspection and/or measurement data may include storing, modifying (e.g., generating coordinate-related inspection and/or measurement data), and transmitting the inspection and/or measurement data.

As a non-limiting example, a trigger point in processing inspection and/or measurement data may be the completion of scanning. For example, the sensing part 131S may scan a sheet material in the width direction of the first electrode sheet ES1, and inspection and/or measurement data may be stored, processed, modified, and transmitted whenever scanning is performed. As another example, the trigger point may be the completion of performing scanning multiple times or the completion of partially performing scanning.

The coordinate-related inspection and/or measurement data CID1/CMD1 transmitted to the roll map PLC 141 may be transmitted to the third server 1230 via the process PLC 143. Alternatively, the coordinate-related inspection and/or measurement data CID1/CMD1 may be transmitted from the process PLC 143 to the third server 1230 via the EIF 1100 (see FIG. 4).

The process PLC 143 and the EIF 1100 may relay communication of data including inspection and/or measurement data between the third server 1230 and the roll map PLC 141. However, the present invention is not limited thereto, and the roll map PLC 141 may directly transmit the coordinate-related inspection and/or measurement data CID1/CMD1 to the third server 1230.

The process PLC 143 may be configured to control the operations of the unwinder 111, the rewinder 113, and the coater 115. The process PLC 143 may be configured to generate signals for operating the unwinder 111, the rewinder 113, and the coater 115 and stopping the operations thereof. The signal may be generated based on a body containing a product ID and details of a manufacturing recipe.

For control of processes, a communication line may be installed between the process PLC 143 and the third server 1230 via the EIF 1100 to connect the process PLC 143 and the third server 1230. Accordingly, data transmission through the process PLC 143 may reduce resources required for the installation of the communication line and ensure efficient data processing and management, compared to a case in which the first and second rotary encoders 121 and 125 and the measuring device 131 directly transmit an unwinding amount signal UWAS1, a winding amount signal WAS1, and the inspection and/or measurement signal IS1/MS1 to the third server 1230 and a case in which the roll map PLC 141 directly transmits related data to the third server 1230.

The process PLC 143 may obtain or store equipment data ED related to coating equipment. The process PCL 143 may transmit the equipment data ED to the eIoT 1150.

The roll map PLC 141 and the process PLC 143 may constitute the coating controller 140 of the coating device.

The third server 1230 may generate the FCDS-1 1232 based on data (the coordinate data CD1, and the coordinate-related inspection and/or measurement data CID1/CMD1) transmitted from the process PLC 143. The FCDS-1 1232 may be, for example, a roll map or a roll map data set in the coating process. The third server 1230 transmits the FCDS-1 1232 to the second server 1220.

The second server 1220 may generate the FCDS 1221 by integrating raw data of the inspection data and/or measurement data ID1/MD1 transmitted from the eIoT 1150 and the FCDS-1 1232 transmitted from the third server 1230. In addition, the second server 1220 may generate processed coordinate data by processing coordinate data included in the FCDS 1221, e.g., processing the coordinate data as described above. The second server 1220 may generate the SCDS 1222 by connecting the processed coordinate data with inspection and/or measurement data of the coating process. The second server 1220 uploads the generated FCDS 1221 and the SCDS 1222 to the first server 1210 at certain periods of time.

In the first server 1210, the FCDS 1211 and the SCDS 1212 uploaded at the certain periods of time are stored for a long time. The first server 1210 may retain data for a relatively longer period of time than the other servers, in order for the information related to the electrode manufacturing to be monitored for a period of time meeting certain requirements. For example, it would be necessary to retain the information for at least a production cycle of a final product. Preferably, it would be required for the data to remain in the server for a longer time period, so that, in the event of a technical problem occurring in a final product, the cause of the problem can be traced back. Considering this aspect, the data retention period in the first server 1210 may be longer than a final product warranty period or a final product lifetime. The EDS 1214 may be generated by receiving equipment data of the coating device from the eIoT 1150. The QDS 1215 may be configured from either the FCDS 1211 or a separate inspection and/or measurement data set transmitted from the second server 1220. In addition, the IDS 1241 including electrode IDs of electrodes produced from a coated electrode sheet may be received from the fourth server 1240. However, the generation of an IDS of electrodes produced from a coating sheet is not immediately performed in the coating process. That is, the identification data is generated after subsequent processes performed after the electrode roll ER2 is wound by the coating device.

When a subsequent process, e.g., the lamination process, is completed and the IDS 1241 is uploaded to the first server 1210, the first server 1210 may extract data from various data sets described above to generate monitoring data for manufacturing a battery.

The first server 1210 may visualize and display the monitoring data on the display device 1300.

Referring to FIG. 5, the roll pressing device 200 may include an unwinder 211, a rewinder 213, a splicing table 215, a scrap port 217, pressing rolls 219, a first rotary encoder 221, a second rotary encoder 223, an inspection and/or measuring device 231, a roll map PLC 241, and a process PLC 243. The roll pressing device 200 may be data-communicatively connected to the server system, including the third server 1230, the second server 1220, and the first server 1210, through the EIF 1100. The roll pressing device 200 may also be data-communicatively connected to the eIoT 1150 that is a separate server. An entire configuration including the roll pressing device 200 and these servers may be referred to as a roll pressing and roll map generation system.

The second electrode roll ER2 may be loaded on the unwinder 211. After the completion of the second electrode roll ER2 by the coating device 100, the second electrode roll ER2 may be transferred to the roll pressing device 200 by a transfer device. The unwinder 211 may be configured to unwind a second electrode sheet ES2 from the second electrode roll ER2. The rewinder 213 may be configured to wind the second electrode sheet ES2 around a third electrode roll ER3. The second electrode sheet ES2 may be wound around the third electrode roll ER3 and may be cut and separated after a certain winding length is reached. Accordingly, the second electrode sheet ES2 may be moved between the unwinder 211 and the rewinder 213.

The first rotary encoder 221 may be configured to detect the amount of the second electrode sheet ES2 unwound from the second electrode roll ER2 by the unwinder 211. Accordingly, the first rotary encoder 221 may be configured to generate an input amount signal UWAS2 indicating a length of the second electrode sheet ES2 unwound by the unwinder 211. The first rotary encoder 221 may be configured to transmit the input amount signal UWAS2 to the roll map PLC 241.

The second rotary encoder 223 may be configured to detect an amount of the second electrode sheet ES2 wound around the third electrode roll ER3 by the rewinder 213. Accordingly, the second rotary encoder 223 may be configured to generate an exhaustion amount signal WAS2 indicating a length of the second electrode sheet ES2 wound by the rewinder 213. The second rotary encoder 223 may be configured to transmit the exhaustion amount signal WAS2 to the roll map PLC 241.

A defective portion DES of the second electrode sheet ES2 is cut on the splicing table 215 and transferred to the scrap port 217. The scrap port 217 may be configured to wind the defective portion DES. After the defective part DES is sufficiently wound around the scrap port 217, the second electrode sheet ES2 connected to the scrap port 217 and the second electrode sheet ES2 connected to the unwinder 211 may be separated. The roll press process may be continued by connecting a portion of the second electrode sheet ES2 connected to the unwinder 211 and a portion of the second electrode sheet ES2 connected to the rewinder 213. The portion of the second electrode sheet ES2 connected to the unwinder 211 and the portion of the second electrode sheet ES2 connected to the rewinder 213 may be connected on the splicing table 215.

The second electrode sheet ES2 passing the splicing table 215 may be pressed by the pressing rolls 219 and thereafter wound around the third electrode roll ER3 by the rewinder 213.

The roll map PLC 141 may be configured to collect coordinate data CD2 of the second electrode sheet ES2, based on the exhaustion amount signal WAS2 and/or the input amount signal UWAS2 of the second electrode sheet ES2.

The coordinate data CD2 may include coordinates matching or indicating each portion of the second electrode sheet ES2.

The inspection and/or measuring device 231 may be configured to inspect or measure the second electrode sheet ES2.

For example, the inspection and/or measuring device 231 may be a vision inspector or a thickness meter. The inspection and/or measuring device 231 may include a sensing part 231S and a processor 231P. The sensing part 231S may be configured to detect a physical quantity of the second electrode sheet ES2 to generate an inspection and/or measurement signal IS2/MS2.

The sensing part 231S may be configured to transmit the inspection and/or measurement signal IS2/MS2 to the processor 231P.

The processor 231P may be configured to collect the inspection and/or measurement signal IS2/MS2 generated by the sensing part 231S to generate inspection and/or measurement data. The processor 231P may be configured to collect the coordinate-related inspection and/or measurement data CID2/CMD2, based on the inspection and/or measurement signal IS2/MS2 and the coordinate data CD2. The processor 231P may be configured to transmit the coordinate-related inspection and/or measurement data CID2/CMD2 to the roll map PLC 241. For example, the coordinate-related inspection and/or measurement data CID2/CMD2 or time series data-related inspection and/or measurement data ID2/MD2 (raw data) may be transmitted from the processor 231P to the eIoT 1150. In addition, the coordinate-related inspection and/or measurement data CID2/CMD2 or the time series data-related inspection and/or measurement data ID2/MD2 may be transmitted from the eIoT 1150 to the second server 122.

The roll map PLC 241 may be in operative communication with the first and second rotary encoders 221 and 223, and the inspection and/or measuring device 231 through a wired or wireless data network.

The coordinate-related inspection and/or measurement data CID2/CMD2 transmitted to the roll map PLC 241 may be transmitted to the third server 1230 via the process PLC 243. Alternatively, the coordinate-related inspection and/or measurement data CID2/CMD2 may be transmitted from the process PLC 243 to the third server 1230 via the EIF 1100 (see FIG. 5).

The process PLC 243 may be configured to control the operations of the unwinder 211, the rewinder 213, and the pressing rolls 219.

The process PLC 243 may obtain or store equipment data ED related to roll pressing equipment. The process PCL 243 may transmit the equipment data ED to the eIoT 1150.

The roll map PLC 241 and the process PLC 243 may constitute the controller 240 of the roll pressing device 200.

The third server 1230 may generate the FCDS-1 1232 based on data (the coordinate data CD2, and the coordinate-related inspection and/or measurement data CID2/CMD2) transmitted from the process PLC 243. The FCDS-1 1232 may be, for example, a roll map or a roll map data set in the roll press process. The third server 1230 transmits the FCDS-1 1232 to the second server 1220.

The second server 1220 may generate the FCDS 1221 by integrating raw data of the inspection data and/or measurement data ID2/MD2 transmitted from the eIoT 1150 and the FCDS-1 1232 transmitted from the third server 1230. In addition, the second server 1220 may generate processed coordinate data by processing coordinate data included in the FCDS 1221. The second server 1220 may generate the SCDS 1222 by connecting the processed coordinate data with inspection and/or measurement data of the roll press process. The second server 1220 may upload the generated FCDS 1221 and SCDS 1222 to the first server 1210 at certain periods of time, e.g., at regular intervals. For example, the second server 1220 may upload the data to the first server 1210 at any time interval ranging from once-per-hour to once-per-day. Preferably, the time interval may be selected as one to three times per day.

In the first server 1210, the FCDS 1211 and the SCDS 1212 uploaded at the certain periods of time are stored for a long time, as already explained above. The EDS 1214 may be generated by receiving equipment data of a roll pressing device from the eIoT 1150. The QDS 1215 may be configured from either the FCDS 1211 or a separate inspection and/or measurement data set transmitted from the second server 1220. In addition, the IDS 1241 including electrode IDs of electrodes produced from a roll-pressed electrode sheet may be received from the fourth server 1240.

When a subsequent process, e.g., the lamination process, is completed and the IDS 1241 is uploaded to the first server 1210, the first server 1210 may extract data from various data sets described above to generate monitoring data for manufacturing a battery.

After the roll press process, the slitting process may be performed. In the slitting process, a plurality of wide electrode sheets are divided into several pieces in a longitudinal direction. In the slitting process, an unwinder, a rewinder, first and second rotary encoders, and a slitting controller including a roll map PLC and a process PLC that are substantially the same as those shown in FIGS. 4 and 5 may be provided. The coordinate-related inspection and/or measurement data CID3/CMD3 is transmitted from the controller 340 of the slitting process to the third server 1230 (see FIG. 2). Thereafter, a desired data set is generated by each server, and a data set related to the slitting process is finally configured by the first server 1210, as in the coating process and the roll press process.

Therefore, a description of parts of the slitting process that are same as those of the coating process and the roll press process is omitted here.

FIG. 6 exemplarily illustrates a notching device 400.

The notching device 400 may include an unwinder 411, a rewinder 413, a notching machine 415, an inspection and/or measuring device 431, a first rotary encoder 421, a second rotary encoder 423, an ID marking machine 433, a first electrode ID reader 435, a roll map PLC 441, and a process PLC 443. The roll map PLC 441 and the process PLC 443 constitute the notching controller 440 of the notching device 400. The notching device 400 may be data-communicatively connected to the server system, including the third server 1230, the second server 1220, and the first server 1210, through the EIF 1100. The notching device 400 may also be data-communicatively connected to the eIoT 1150 that is a separate server. An entire configuration including the notching device 400 and the above-described servers may be referred to as a notching roll map generation system, and may form part of the battery manufacturing system 10.

In the notching process, a fourth electrode roll ER4 may be loaded on the unwinder 411. The fourth electrode roll ER4 may be a slitting roll wound after a previous process, e.g., the slitting process. The unwinder 411 may be configured to unwind an electrode sheet (a fourth electrode sheet ES4) from the fourth electrode roll ER4 in the notching process. The rewinder 413 may be configured to wind the fourth electrode sheet ES4, which is notched after being unwound by the unwinder 411, around a fifth electrode winding roll ER5. The fourth electrode sheet ES4 may be wound around the fifth electrode winding roll ER5 and may be cut and separated after a certain winding length reaches.

The first rotary encoder 421 may be configured to detect the amount of the fourth electrode sheet ES4 unwound from the fourth electrode roll ER4 by the unwinder 411. The first rotary encoder 421 may be configured as a contact type or a non-contact type. The first rotary encoder 421 may be configured to generate an unwinding amount (input amount) signal UWAS4 indicating the length of the fourth electrode sheet ES4 unwound by the unwinder 411. The first rotary encoder 421 may be configured to transmit the unwinding amount signal UWAS4 to the roll map PLC 441.

The second rotary encoder 423 may be configured to detect the amount of the fourth electrode sheet ES4 wound around the fifth electrode roll ER5 by the rewinder 413. Accordingly, the second rotary encoder 423 may be configured to generate an winding amount (exhaustion amount) signal WAS4 indicating a length of the fourth electrode sheet ES4 wound by the rewinder 413. The second rotary encoder 423 may be configured to transmit the winding amount signal WAS4 to the roll map PLC 441.

The notching machine 415 may be a device configured to mechanically punch electrode tabs in a metal foil on which an electrode active material is formed to a substantially uniform thickness and width or to cut and remove a portion of the metal foil, e.g., by laser. For example, the notching machine 415 may be a notching press device.

After notching processing, the ID marking machine 433 may mark an electrode ID EID on each of the electrode tabs. The ID marking machine 433 may be, for example, an inkjet type ink marking machine or a laser type laser marking machine but is not limited thereto.

The first electrode ID reader 435 may be configured to detect an electrode ID EID. The first electrode ID reader 435 may be configured to read an order indicated by the electrode ID EID. The first electrode ID reader 435 may be, for example, a bar code reader (BCR) but is not limited thereto. The first electrode ID reader 435 may be an optical character reader (OCR). The first electrode ID reader 435 may be configured to generate an electrode ID detection signal EIDS, based on the detection of the electrode ID EID. The first electrode ID reader 435 may be configured to transmit the electrode ID detection signal EIDS to the notching controller 440.

Meanwhile, the ID marking machine 433 or the first electrode ID reader 435 may include a tab sensor and a trigger board to obtain order (count) information of electrode IDs.

The tab sensor may identify a length, i.e., a pitch, of each electrode. The trigger board may increase a count value, based on a length of an electrode received from the tap sensor. The trigger board may convert a count value per electrode length into a BCD code and transmit the BCD code to the ID marking machine 433, the first electrode ID reader 435, or the notching controller 440.

As described above, the ID marking machine 433 or the first electrode ID reader 435 may receive information about specifications of an electrode (pitch information) and obtain a count value (order information) per pitch to mark or identify an electrode ID for each electrode tab of a corresponding pitch.

The inspection and/or measuring device 431 may be configured to inspect or measure the fourth electrode sheet ES4 to collect inspection and/or measurement data of the fourth electrode sheet ES4. The inspection and/or measuring device 431 may include a sensing part 431S and a processor 431P. The sensing part 531S may be configured to detect a physical quantity of the fourth electrode sheet ES4 to generate an inspection and/or measurement signal IS4/MS4.

The sensing part 431S may be configured to transmit the inspection and/or measurement signal IS4/MS4 to the processor 431P.

The processor 431P may be configured to collect the inspection and/or measurement signal IS4/MS4 generated by the sensing part 431S to generate inspection and/or measurement data. The processor 431P may be configured to collect the coordinate-related inspection and/or measurement data CID4/CMD4, based on the inspection and/or measurement signal IS4/MS4 and coordinate data CD4. The processor 431P may be configured to transmit the coordinate-related inspection and/or measurement data CID4/CMD4 to the roll map PLC 441. According to example embodiments, the coordinate-related inspection and/or measurement data CID4/CMD4 or time series data-related inspection and/or measurement data ID4/MD4 (raw data) may be transmitted from the processor 431P to the eIoT 1150. In addition, the coordinate-related inspection and/or measurement data CID4/CMD4 or the time series data-related inspection and/or measurement data ID4/MD4 may be transmitted from the eIoT 1150 to the second server 1220.

The roll map PLC 441 may be configured to collect the coordinate data CD4 of the fourth electrode sheet ES4, based on winding amount data or unwinding amount data of the fourth electrode sheet ES4.

The coordinate data CD4 may include coordinates matching or indicating each portion of the fourth electrode sheet ES4.

The roll map PLC 441 may be in operative communication with the first and second rotary encoders 421 and 423, the inspection and/or measuring device 431, the ID measuring device 433, and the first electrode ID reader 435 through a wired or wireless data network.

The roll map PLC 441 may be configured to transmit the coordinate data CD4 to the processor 431P. The processor 431P may be configured to connect the coordinate data CD4 with inspection and/or measurement data to generate the coordinate-related inspection and/or measurement data CID4/CMD4.

The coordinate-related inspection and/or measurement data CID4/CMD4 transmitted to the roll map PLC 441 may be transmitted to the third server 1230 via the process PLC 443 and the ELF 1100.

The process PLC 443 may be configured to control the operations of the unwinder 411, the rewinder 413, the notching machine 415, the ID marking machine 433, and the first electrode ID reader 435.

The process PLC 143 may obtain or store equipment data ED related to notching equipment. The process PCL 443 may transmit the equipment data ED to the eIoT 1150.

The notching controller 440 may be configured to collect first electrode ID-related data EIDD1 that includes the electrode ID EID and a first coordinate of a position of the fourth electrode sheet ES4 in the notching process matching the electrode ID EID. The first coordinate may be obtained based on an unwinding amount signal and/or a winding amount of the fourth electrode sheet ES4 when the electrode ID EID is detected in the notching process. Generally, the first coordinate may indicate a length position on the electrode sheet where the electrode ID is marked. The first coordinate may include one or more coordinate values indicating a single position or a length section of the electrode sheet corresponding to the position of the electrode ID.

The first electrode ID reader 435 may be configured to generate an electrode ID detection signal EIDS, based on the detection of the electrode ID EID, e.g., in response to detecting or reading the electrode ID EID marked on the notched electrode (sheet). The first electrode ID reader 435 may be configured to transmit the electrode ID detection signal EIDS to the notching controller 440.

Specifically, the first electrode ID reader 435 detects a certain electrode ID on the fourth electrode sheet ES4 and transmits the electrode ID detection signal EIDS to the roll map PLC 441 of the notching controller 440. The roll map PLC 441 may collect coordinates (a first coordinate) of a position of a portion of the fourth electrode sheet ES4 corresponding to the electrode ID EID from the unwinding amount signal UWAS4 or the winding amount signal WAS4 of the fourth electrode sheet ES4 at a point in time when the electrode ID detection signal EIDS is detected. That is, in the notching process, the notching controller 440 may collect first electrode ID-related data EIDD1 that includes an electrode ID and a first coordinate matching the electrode ID. To distinguish between electrode ID-related data in the notching process and electrode ID-related data in the lamination process, the former may be referred to as the first electrode ID-related data EIDD1 and the latter may be referred to as the second electrode ID-related data EIDD2.

A position of the fourth electrode sheet ES4 at a point in time when the first electrode ID reader 435 senses an electrode ID may be different from that of the fourth electrode sheet ES4 based on data of an amount of unwinding detected by the first rotary encoder 421 or data of an amount of winding detected by the second rotary encoder 423.

Optionally, the first coordinate may be a value calculated by subtracting an offset distance from the unwinder 411 to the first electrode ID reader 435 from a coordinate of the fourth electrode sheet ES4 based on the data of the amount of unwinding detected by the first rotary encoder 421 at the point in time when the electrode ID is sensed.

Optionally, the first coordinate may be a value calculated by adding an offset distance from the rewinder 413 to the first electrode ID reader 435 to a coordinate of the fourth electrode sheet ES4 based on the data of the amount of winding detected by the second rotary encoder 423 at the point in time when the electrode ID is sensed.

The first coordinate may be a start coordinate value or an end coordinate value of a portion of the fourth electrode sheet ES4 of a certain pitch, which includes an electrode tab on which the electrode ID EID is marked, or a coordinate of the electrode tab. Alternatively, the first coordinate may include at least two among the start coordinate value and the end coordinate value of the portion of the fourth electrode sheet ES4 of the pitch, which includes the electrode tab on which the electrode ID EID is marked, and the coordinate of the electrode tab.

The electrode ID EID and the first electrode ID-related data EIDD1 may be transmitted to the fourth server 1240 from the roll map PLC 441 via the process PLC 443.

The third server 1230 may generate the FCDS-1 1232 based on data (the coordinate data CD4, and the coordinate-related inspection and/or measurement data CID4/CMD4) transmitted from the process PLC 443. The FCDS-1 1232 may be, for example, a roll map or a roll map data set in the notching process. The third server 1230 transmits the FCDS-1 1232 to the second server 1220.

The second server 1220 may generate the FCDS 1221 by integrating raw data of the inspection data and/or measurement data ID4/MD4 transmitted from the eIoT 1150 and the FCDS-1 1232 transmitted from the third server 1230. The FCDS is the entire raw data associated with coordinate data, whereas in the FCDS-1 1232, the processed data of the inspection data and/or the measurement data or some of these processed data are connected or associated with the coordinate data. Integrating the FCDS-1 into the FCDS means that the first coordinate correlation dataset, FCDS, becomes to comprise both raw data and the processed, representative data, such as averages. As another example, sometimes image data may be included only in the FCDS because they are too large to be included in the FCDS-1. In such a case, integrating data may also include, for example, associating the image file in the FCDS with other processed, e.g., compressed, data, such as averages for that section. In addition, the second server 1220 may generate processed coordinate data by processing coordinate data included in the FCDS 1221. The second server 1220 may generate the SCDS 1222 by associating the processed coordinate data with inspection and/or measurement data of the notching process. The second server 1220 may upload the generated FCDS 1221 and the SCDS 1222 to the first server 1210 at certain periods of time, e.g., at regular intervals. For example, the second server 1220 may upload the data to the first server 1210 at any time interval ranging from once-per-hour to once-per-day. Preferably, the time interval may be selected as one to three times per day.

In the first server 1210, the FCDS 1211 and the SCDS 1212 uploaded at the certain periods of time are stored for a long time. For example, the first server 1210 may retain data for at least a production cycle of a final product. Preferably, the data retention period in the first server 1210 may be longer than a final product warranty period or a final product lifetime. The EDS 1214 may be generated by receiving equipment data of the notching device from the eIoT 1150. The QDS 1215 may be configured from a separate inspection and/or measurement data set transmitted from the FCDS 1211 or the second server 1220. In addition, the IDS 1241 including electrode IDs EID of sectional electrodes produced from a notched electrode sheet may be received from the fourth server 1240.

When a subsequent process, e.g., the lamination process, is completed and the IDS 1241 is uploaded to the first server 1210, the first server 1210 may extract data from various data sets described above to generate monitoring data for manufacturing a battery.

Referring to FIGS. 7 and 8, the lamination device 500 may include a positive electrode unwinder 511P, a negative electrode unwinder 511N, separator unwinders 511S1 and 511S2, electrode cutters 513P and 513N, guide rolls 515, a separator cutter 517, rotary encoders 521P and 521N, optional seam sensors 523P and 523N, an optional electrode gap sensor 525, a second electrode ID reader 527, a controller 540, and servers 1210, 1220, and 1230. The servers 1210, 1220, and 1230 may form part of the monitoring system as described above. Generally, the lamination device 500 may be data communicatively connected to the servers 1210, 1220, 1230.

The lamination device 500 may be configured to perform, for example, a lamination and stacking process. Mono-cells MC may be provided as a result of the lamination process. Each of the mono-cells MC may include a positive electrode EPP, a negative electrode EPN, and separators. In the stacking process, the mono-cells MC and additional half-cells may be stacked in a vertical direction to provide an electrode assembly.

The unwinders 511P, 511N, 511S1, and 511S2 may be configured to put roll type materials into the lamination device 500. More specifically, the unwinder 511P may be configured to unwind the positive electrode sheet ESP from a positive electrode roll ERP, the unwinder 511N may be configured to unwind the negative electrode sheet ESN from a negative electrode roll ERN, and the separator unwinders 511S1 and 511S2 may be configured to unwind separator sheets SS1 and SS2 from separator rolls SR1 and SR2.

The positive electrode roll ERP and the negative electrode roll ERN may be provided through a series of battery manufacturing processes. For example, the positive electrode roll ERP and the negative electrode roll ERN may be provided by the coating process, the roll press process, a selective slitting process, and the notching process.

The coating process and the roll press process are performed on a wide electrode sheet to enhance the production (e.g., measured in GWh) per line of battery production equipment. Thereafter, in the slitting process, the wide electrode sheet may be cut according to the specifications of a battery cell. The slitting process may be omitted according to the specifications of the battery cell.

A first or positive electrode cutter 513P may be configured to cut the positive electrode sheet ESP. A plurality of positive electrodes EPP may be provided by cutting the positive electrode sheet ESP. A second or negative electrode cutter 513N may be configured to cut the negative electrode sheet ESN. A plurality of negative electrodes EPN may be provided by cutting the negative electrode sheet ESN. The positive and negative electrodes being examples of sectional electrodes.

The controller 540 may control operations of the positive electrode cutter 513P and the negative electrode cutter 513N as will be described below and thus may be configured to count cuts of the positive electrode sheet ESP by the positive electrode cutter 513P and cuts of the negative electrode sheet ESN by the negative electrode cutter 513N. For example, the controller 540 may be configured to receive a first cut count signal CCSN from the negative electrode cutter 513N and a second cut count signal CCSP from the positive electrode cutter 513P.

The guide rolls 515 may be configured to define a path of the separator sheets SS1 and SS2. The separator sheets SS1 and SS2 may be aligned side by side by the guide rolls 515. Positive electrodes EPP and negative electrodes EPN may be placed on the separator sheets SS1 and SS2. For example, the negative electrodes EPN may be placed on the separator sheet SS2, and the positive electrodes EPP may be placed on the separator sheet SS1. The positive electrodes EPP and the negative electrodes EPN may be electrically and physically separated by the separator sheet SS1.

The separator cutter 517 may be configured to cut the separator sheets SS1 and SS2. Before the separator sheets SS1 and SS2 are cut by the separator cutter 517, a stacked structure of the separator sheets SS1 and SS2, the positive electrodes EPP, and the negative electrodes EPN may be pressurized by a nip roll (not shown) or the like. By cutting the separator sheets SS1 and SS2, a mono-cell MC including the positive electrodes EPP, the negative electrodes EP, and separators may be provided.

The first rotary encoder 521N may be configured to detect an amount of rotation of the unwinder 511N. The first rotary encoder 521N may be configured to detect an amount of the negative electrode sheet ESN unwound from the negative electrode roll ERN by the unwinder 511N. Accordingly, the first rotary encoder 521N may be configured to generate a first input amount signal UWSN indicating a length of the negative electrode sheet ESN unwound by the unwinder 511N (i.e., an amount of input of the negative electrode sheet ESN). The first rotary encoder 521N may be configured to transmit the first input amount signal UWSN to the controller 540.

The second rotary encoder 521P may be configured to detect an amount of rotation of the unwinder 511P. The second rotary encoder 521P may be configured to detect an amount of the positive electrode sheet ESP unwound from the positive electrode roll ERP by the unwinder 511P. Accordingly, the second rotary encoder 521P may be configured to generate a second input amount signal UWSP indicating a length of the positive electrode sheet ESP unwound by the unwinder 511P (i.e., an amount of input of the positive electrode sheet ESP). The second rotary encoder 521P may be configured to transmit the second input amount signal UWSP to the controller 540.

The first seam sensor 523N may be configured to detect seams on the negative electrode ESN. Here, there may be seams on the negative electrode sheet ESN when the negative electrode roll ERN is replaced with another (i.e., a subsequent negative electrode roll ERN is loaded on the unwinder 511N), when an electrode is broken in a current process (i.e., during processing of the negative electrode sheet ESN by the lamination device 500), or when the electrode was broken in a previous process (i.e., during processing of the negative electrode roll ERN before being loaded on the unwinder 511N.

The first seam sensor 523N may be, for example, a color sensor but is not limited thereto. The first seam sensor 523N may be configured to generate a first seam detection signal JSSN. The first seam detection signal JSSN may be transmitted to the controller 540.

The second seam sensor 523P may be configured to detect seams on the positive electrode sheet ESP. Here, there may be seams on the positive electrode sheet ESP when the positive electrode roll ERP is replaced with another (i.e., a subsequent positive electrode roll ERN is loaded on the unwinder 511P), when an electrode is broken in a current process (i.e., during processing of the positive electrode sheet ESP by the lamination device 500), or when the electrode was broken in a previous process (i.e., during processing of the positive electrode roll ERP before being loaded on the unwinder 511P.

The second seam sensor 523P may be, for example, a color sensor but is not limited thereto. The second seam sensor 523P may be configured to generate a second seam detection signal JSSP. The second seam detection signal JSSP may be transmitted to the controller 540.

The electrode gap sensor 525 may be configured to detect gaps between positive electrodes EPP and negative electrodes EPN. For example, the electrode gap sensor 525 may be configured to detect gaps between the positive electrodes EPP. As another example, the electrode gap sensor 525 may be configured to detect gaps between the negative electrodes EPN. As another example, the electrode gap sensor 525 may be configured to detect gaps between the positive electrodes EPP and gaps between the negative electrodes EPN.

The electrode gap sensor 525 may be configured to generate a gap detection signal ISS. The electrode gap sensor 525 may be configured to transmit the gap detection signal ISS to the controller 540.

The second electrode ID reader 527 may be configured to detect an electrode ID EID. The second electrode ID reader 527 may be configured to read an order indicated by the electrode ID EID. The second electrode ID reader 527 may be configured to generate an electrode ID detection signal EIDS, based on the detection of the electrode ID EID, e.g., in response to reading or detecting an electrode ID EID marked on a respective sectional electrode. The second electrode ID reader 527 may be configured to transmit the electrode ID detection signal EIDS to the controller 540.

The controller 540 may be configured to control elements, e.g., the unwinders 511P, 511N, 511S1, and 511S2, the positive electrode cutter 513P, the negative electrode cutter 513N, and the separator cutter 517, of the lamination device 500.

Cutting may be performed by the positive electrode cutter 513P and the negative electrode cutter 513N, based on a pitch that is a regular repetition unit. The pitch may be a minimum unit length in which the same shape or structure is repeated, similar to a length between positive electrode tabs TP in the moving direction of neighboring positive electrodes EEP. Because the positive electrode sheet ESP is cut into parts of substantially the same target length, an amount of input of the positive electrode sheet ESP may be proportional to a cut count (e.g., a cut count signal CCSP) from the positive electrode cutter 513P. Likewise, because the negative electrode sheet ESN is cut into parts of substantially the same target length, an amount of input of the negative electrode sheet ESN may be proportional to a cut count (e.g., a cut count signal CCSN) from the negative electrode cutter 513N.

More specifically, as shown in Equation 1, the amount of input of the positive electrode sheet ESP may be the sum of the product of a cut count Cut count_P and a pitch Pitch_P and an offset length OLP2. Here, the offset length OLP2 may be a length of the positive electrode sheet ESP between the unwinder 511P and the positive electrode cutter 513P.

[Equation 1]

$$\text{Amount of input\_P} = \text{OLP2} + (\text{Pitch\_P}) * (\text{Cut count\_P})$$

Similarly, as shown in Equation 2, the amount of input of the negative electrode sheet ESN may be the sum of the product of a cut count Cut count_N and a pitch Pitch_N and an offset length OLP2. Here, the offset length OLN2 may be a length of the negative electrode sheet ESN between the unwinder 511N and the negative electrode cutter 513N.

[Equation 2]

$$\text{Amount of input\_N} = \text{OLN2} + (\text{Pitch\_N}) * (\text{Cut count\_N})$$

As another example, the amount of input of the negative electrode sheet ESN may be determined from the first input amount signal UWSN from the first rotary encoder 521N, and the amount of input of the positive electrode sheet ESP may be determined from the second input amount signal UWSP from the second rotary encoder 521P.

The controller 540 may be configured to collect the second electrode ID-related data EIDD2, based on the electrode ID detection signal EIDS, the amount of input of the positive electrode sheet ESP, and the amount of input of the negative electrode sheet ESN. As described above, the amount of input of the negative electrode sheet ESN may be calculated based on a cut count from the negative electrode cutter 513N or be determined by the first input amount signal UWSN.

As described above, the amount of input of the positive electrode sheet ESP may be calculated based on a cut count from the positive electrode cutter 513P or be determined by the second input amount signal UWSP.

The controller 540 may be configured to match a coordinate of the negative electrode EPN detected by the second electrode ID reader 527 to the electrode ID detection signal EIDS.

The controller 540 may be configured to match a coordinate of the positive electrode EPP coupled to the negative electrode EPN detected by the second electrode ID reader 527 to the electrode ID detection signal EIDS.

Here, the coordinate of the negative electrode EPN may be a start or end coordinate value of the negative electrode EPN or a coordinate value of a negative electrode tab TN. The coordinate of the negative electrode EPN may include at least two among the start and end coordinates values of the negative electrode EPN and the coordinate value of the negative electrode tab TN. A coordinate of the positive electrode EPP may be a start or end coordinate value of the positive electrode EPP or coordinate values indicating a portion of the positive electrode EPP overlapping the negative electrode tab TN. Alternatively, the coordinate of the positive electrode EPP may include at least two among the start and end coordinate values of the positive electrode EPP and the coordinate values of the portion of the positive electrode EPP overlapping the negative electrode tab TN.

To match the electrode ID EID to the coordinate of the positive electrode sheet ESP and the coordinate of the negative electrode sheet ESN, a lot number of the positive electrode roll ERP from which the positive electrode sheet ESP is unwound, and a lot number of the negative electrode roll ERN from which the negative electrode sheet ESN is unwound should be determined. The seam detection signal JSSP and the seam detection signal JSSN may be used to identify a lot. For example, the controller 540 may update lot numbers of the positive electrode roll ERP and the negative electrode roll ERN, based on the seam detection signal JSSP and the seam detection signal JSSN. Accordingly, the coordinate of the negative electrode sheet ESN and the coordinate of the positive electrode sheet ESP may be reset, based on the seam detection signal JSSP and the seam detection signal JSSN.

The second electrode ID-related data EIDD2 may include at least one of the coordinate of the positive electrode sheet ESP matching the electrode ID EID of the negative electrode EPN or the coordinate of the negative electrode sheet ESN.

The controller 540 may transmit the electrode ID EID and the second electrode ID-related data EIDD2 to the fourth server 1240. The fourth server 1240 may generate an IDS 1241 by combining pitch data PD with the electrode ID EID and the first electrode ID-related data EIDD1 transmitted from the notching controller 440 and the electrode ID EID and the second electrode ID-related data EID2 transmitted from the lamination controller 540 (see FIG. 2). The IDS 1241 generated by the fourth server 1240 may be uploaded to the first server 1210 at certain periods of time.

In the first server 1210, the FCDS 1211 and the SCDS 1212 uploaded at the certain periods of time are stored for a long time. The EDS 1214 may be generated by receiving equipment data of the notching device from the eIoT 1150. The QDS 1215 may be configured from a separate inspection and/or measurement data set transmitted from the FCDS 1211 or the second server 1220. When the lamination process is completed and the IDS 1241 is uploaded to the first server 1210, the first server 1210 may extract data from various data sets described above to generate monitoring data for manufacturing a battery.

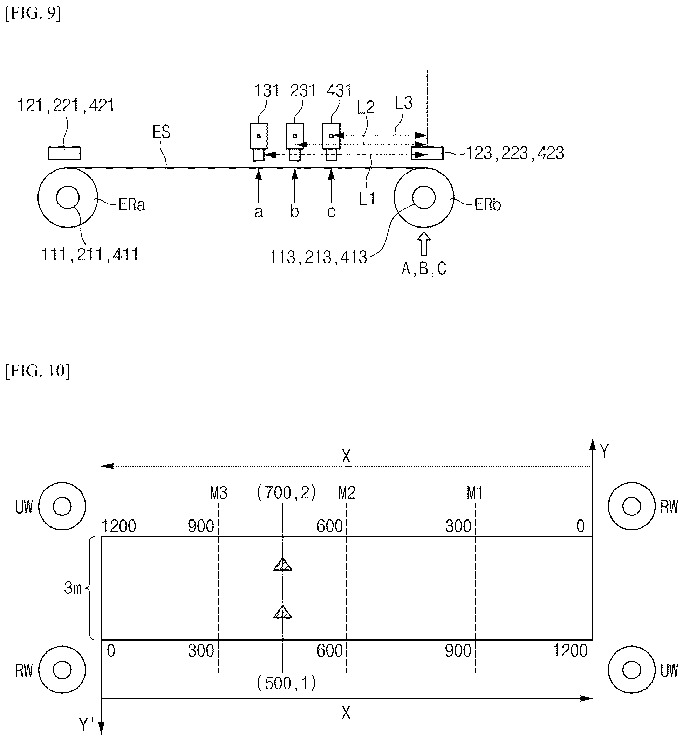

FIG. 9 is a diagram illustrating an offset distance of inspection and/or measuring devices.

In FIG. 9, when inspection and/or measurement data is obtained by inspecting an electrode sheet ES by each of inspection and/or measuring devices 131, 231, and 431, a location signal of a corresponding portion of an electrode is detected by first rotary encoders 123, 223, and 443 of rewinders 113, 213, and 413. However, the portion of the electrode has yet to arrive at the rewinder 113, 213 or 413 at a point in time when the inspection and/or measurement data is obtained. Therefore, a coordinate of the portion of the electrode when the inspection and/or measurement data is obtained is the sum of a distance (offset distance) from the inspection and/or measuring device 131, 231 or 431 to the rewinder 113, 213 or 413 and a coordinate calculated based on an encoder signal from the rewinder 113, 213 or 413 when this data is obtained. For example, a longitudinal-axis coordinate of a portion a of the electrode, the amount of loading of which is detected by the inspection and/or measuring device 131 of a coating device is the sum of a coordinate A based on an encoder signal from the rewinder 113 when the amount of loading is detected and an offset distance L1 between the inspection and/or measuring device 131 and the rewinder 113. Similarly, a longitudinal-axis coordinate of a portion b of the electrode detected by the inspection and/or measuring device 231 of a roll pressing device is the sum of a coordinate B based on an encoder signal from the rewinder 213 and an offset distance L2 between the inspection and/or measuring device 231 and the rewinder 213. In addition, a longitudinal-axis coordinate of a portion c of the electrode detected by the inspection and/or measuring device 431 of a notching device is the sum of a coordinate C based on an encoder signal from the rewinder 413 and an offset distance L3 between the inspection and/or measuring device 431 and the rewinder 413. The above-described offset distances L1, L2, and L3 are only examples, and positions of inspection and/or measuring devices in various processes are not necessarily determined as shown in FIG. 9. The above-described principle of correcting a coordinate according to an offset distance also applies to the lamination process.

As described above, coordinates should be corrected according to an offset length in the roll-to-roll process, because a point in time when certain data is obtained and a position at which a signal from a rotary encoder is detected at the point in time are different in a plurality of processes of manufacturing electrodes.

FIG. 10 is a diagram illustrating correcting coordinate data when a start and end of an electrode are inverted. FIG. 10 illustrates coordinates of a real electrode or a roll map that simulates the real electrode, and coordinate axes.

An upper part of an electrode (roll map) represents coordinate axes (an X-axis and a Y-axes) and coordinates in a preceding process. In the preceding process, the electrode is moved from an unwinder to a rewinder and is wound by the rewinder. In this case, a longitudinal axis (X-axis) coordinate of a triangular point was measured as 700 meters and a traverse axis (Y-axis) coordinate thereof was measured as 2 meters (when it was assumed that a width of the electrode is 3 meters). When the electrode roll completely wound by an unwinder UW in the preceding process is mounted on a rewinder RW in a subsequent process, a 1200-m point that is an end point of the electrode roll in the preceding process becomes a 0-meter point that is a start part of the end roll the subsequent process. That is, the start and end of the electrode roll in the preceding process are inverted in the subsequent process due to characteristics of the electrode roll. The inversion of the start and end of the electrode roll may be understood to mean that the longitudinal axis (X-axis) in the preceding process is symmetrically transformed with respect to the traverse axis (Y-axis) to become a longitudinal axis (X'-axis) in the subsequent process, and the traverse axis (Y-axis) in the preceding process is symmetrically transformed with respect to the longitudinal axis (X-axis) to become a traverse axis (Y'-axis) in the subsequent process. Therefore, the coordinates (700 meters, 2 meters) of the triangular point in the preceding process are inverted to (500 meters, 1 meter) in the subsequent process.

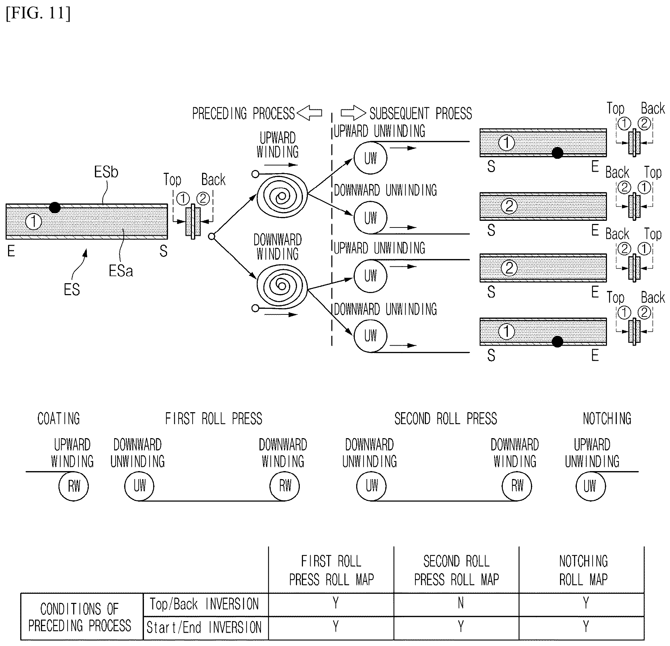

FIG. 11 is a diagram illustrating the inversion of a surface, start and end of an electrode according to a direction of winding the electrode and a direction of unwinding the electrode.

In FIG. 11, first, in the case of an electrode path, a black point is moved between a preceding process and a subsequent process, i.e., an electrode in the preceding process is inverted in a longitudinal direction and a width direction in the subsequent process. That is, a start and end of the electrode are inverted. In this case, a top surface and back surfaces of the electrode sheet ES are not inverted.

Second, not only the start and end of the electrode sheet ES but also the top and back surfaces of the electrode sheet ES are inverted when a direction of winding by a rewinder in the preceding process is upward winding (winding clockwise) and a direction of unwinding by an unwinder UW in the subsequent process is downward winding (winding counterclockwise). For example, the electrode sheet moved while the top surface faces upward in the coating process is flipped over and moved while the back surface faces upward in the roll press process. Therefore, this point should be considered during processing of coordinate data as described below.

Third, not only the start and end of the electrode sheet ES but also the top and back surfaces of the electrode sheet ES are inverted when a direction of winding by the rewinder in the preceding process is downward winding (winding counterclockwise) and a direction of unwinding by the unwinder UW in the subsequent process is upward winding (winding clockwise), as in the second case.

Fourth, only the start and end of the electrode sheet ES are inverted when a direction of winding by the rewinder in the preceding process is downward winding and a direction of unwinding by the unwinder UW in the subsequent process is downward winding, as in the first case.

A lower diagram of FIG. 11 illustrates whether start/end inversion or top/back inversion occurs in a direction of winding and a direction of unwinding when a coating process, first and second roll press processes, and a notching process are performed.

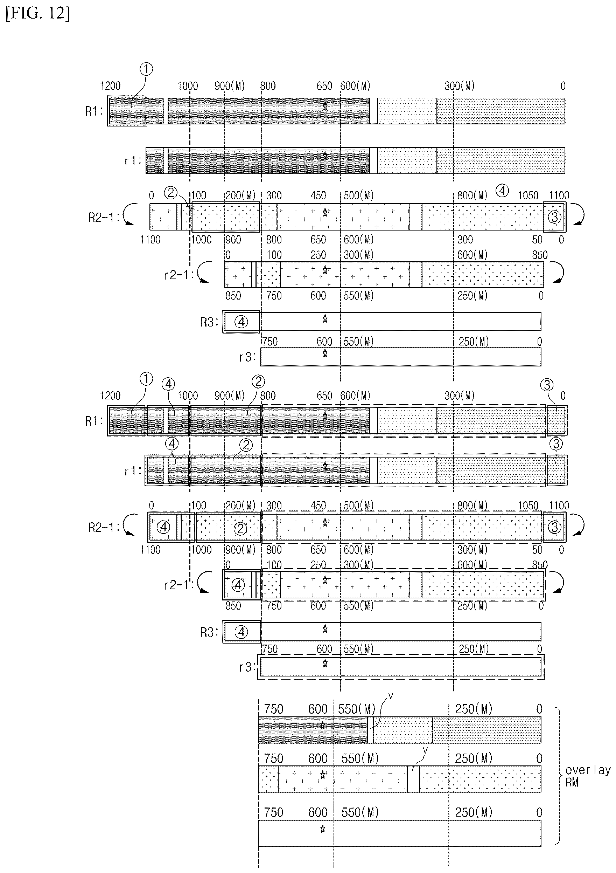

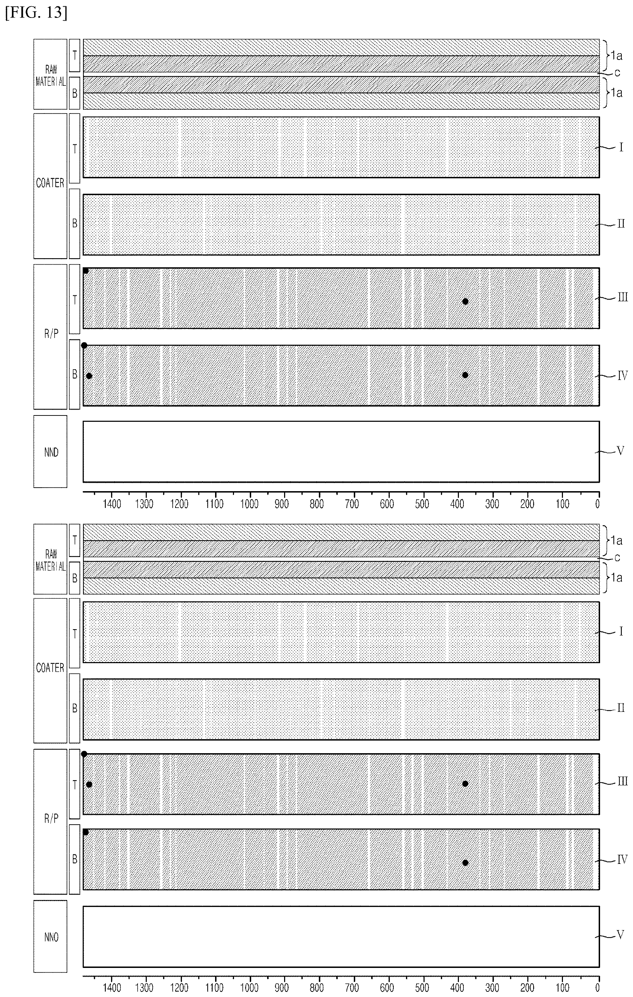

FIG. 13 is a diagram illustrating processing coordinate data to generate processed coordinate data. FIG. 12 illustrates processing coordinate data while reflecting start/end inversion and an electrode loss in the electrode manufacturing process described above.

An absolute-coordinate roll map R1 and a relative-coordinate roll map r1 in the coating process, an absolute-coordinate roll map R2 and a relative-coordinate roll map R21 in the roll press process, and an absolute-coordinate roll map R3 and a relative-coordinate roll map r3 in the notching process are shown in order from top to bottom in FIG. 12.

The relative-coordinate roll maps represent a real electrode, excluding a portion of the electrode removed in each process or between processes, in each process. The absolute-coordinate roll maps show the remaining real electrode (surviving electrode) together with the removed portions of the electrode.

In a series of roll-to-roll sub-processes, real electrodes may be removed before or after at least some of the sub-processes or in a corresponding sub-process due to defects, nonuniform quality or the like. Accordingly, roll map coordinates in a final process may be different from those of a respective other sub-process. When there is no change in a length of the electrode between a start process and the final process among the roll-to-roll processes, roll-map length matching is not required. However, the quality of a start and end of an electrode is highly likely to be low due to features of a mass-production process, and portions of an electrode produced by way of trial before mass production are generally removed. Therefore, actually, it is inevitable that there is a change in a length of the electrode between a start process and the final process for any reason.

To process coordinate data, it is advantageous to remove all coordinate sections corresponding to portions of a real electrode that are cumulatively removed in a series of roll-to-roll processes. In addition, a length of the roll map in each of the processes may be matched to a length of the roll map in the final process by correcting coordinates of coordinate sections, which remain after the removing of portions of the electrode, in each of the processes to match coordinates of the roll map in the final process.

In addition, when a positive direction of a coordinate axis on a roll map in a certain process before a final process is inverted to a negative direction of the coordinate axis on the roll map in the final process according to a direction of winding the electrode by the rewinder RW in a preceding process and a direction of unwinding the electrode by the unwinder UW in a subsequent process, the positive direction of the coordinate axis on the roll map in the process is matched to a positive direction of the coordinate axis on the roll map in the final process.

Referring to FIG. 12, electrode removal was carried out four times in the entire roll-to-roll process, as follows:

removing an end portion of the electrode by 100 meters at the end of the coating process;

removing a defective section by 200 meters in the roll press process;

removing the end portion by 50 meters after the roll press process; and

removing the end portion by 100 meters after the notching process.

When there is a change in a coordinate due to a change in the length of the electrode, i.e., when there is a change in a gap between reference points on the electrode according to the progress of a process, a length of a lost portion of the electrode may be calculated from the 0hange in the gap. In FIG. 12, there are three reference points at positions of 300 m, 600 m, and 900 m on an electrode that is 1200 m long, and a loss of the electrode may be identified from a change in gaps between the reference points according to the progress of a process.

A total length of a relative-coordinate roll map r3 in the notching process that is a final process is 750 meters due to four-time electrode removal. In addition, a coordinate of a portion of the electrode, which is to be compared and is located at an asterisk point in the longitudinal direction, was 600 meters and a coordinate thereof in a width direction was 40 cm (0.4 meters).

Referring to FIG. 12, to match with a length of the roll map in the final process, all coordinate sections of electrode portions removed four times in the entire roll-to-roll process are removed from a relative coordinate roll map in each process. In this case, parts indicated by a dotted box in FIG. 12 are roll map parts represented by a finally surviving real electrode.

In this case, positive directions of the coordinate axes on the roll map coordinate in the coating process are the same as those of the coordinate axes on the roll map in the notching process and thus coordinate axis matching is not necessary. However, positive directions of the coordinate axes on the roll map in the roll press process are inverted and thus are different from those of the coordinate axes on the roll map in the coating process and the notching process and thus coordinate axis matching is necessary.

In FIG. 12, upper ends of an absolute coordinate roll map R2 and a relative coordinate roll map r2 in the roll press process represent coordinates before coordinate axis matching. When these coordinates are inverted (corrected) as in a lower part of the corresponding roll map, the positive directions of the coordinate axes on the roll map in the roll press process become the same as those of the coordinate axes on the roll map in the notching process. Matching coordinate axes on the roll maps results in a change in all coordinates of reference points on the absolute coordinate roll map R2 and the relative coordinate roll map r2, coordinates in a defective section, and coordinates of asterisk points in the roll press process. Specifically, both a longitudinal axis and a traverse axis, which are coordinate axes, on the roll map in the roll press process are matched to the directions of the coordinate axes in the notching process. In FIG. 12, reference numerals R2-1 and r2-1 represent the inversion of the coordinate axes on the absolute coordinate roll map R2 and the relative coordinate roll map r2 in the roll press process. That is, R2-1 represents the absolute coordinate roll map, the coordinate axes of which are inverted in the roll press process, and r2-1 represents the relative coordinate roll map, the coordinate axes of which are inverted in the roll press process.

In FIG. 12, the roll-to-roll process includes an odd number of operations (three operations) and thus directions of the coordinate axes on the roll map are the same in a first operation (coating process) and a final process (notching process). Therefore, the coordinate axes on the roll map in a second process (roll press process), which is an even-numbered operation in which the directions of the coordinate axes are inverted, are matched to those of the coordinate axes in the final process. However, when a process is added and thus the roll-to-roll process includes an even number of operations, the coordinate axes in odd-numbered operations such as the first operation should be matched to those in the final process that is an even-numbered operation.

As described above, coordinate axis matching is performed relatively based on the final process.

At the bottom of FIG. 12, roll maps finally matched by processing coordinate data are shown. Directions of the coordinate axes on the roll map in the coating process and the roll press process are matched to those of the coordinate axes in the notching process by removing coordinate sections corresponding to electrode portions removed in the coating process and the roll press process. Accordingly, the coordinates on the roll map in the notching process, which is the final process, are exactly the same as those on the roll maps in the coating process and the roll press process, which are preceding processes. In the three roll maps, coordinates of asterisk points on the longitudinal axis and the traverse axis are 600 meters and 0.4 meters, i.e., they are the same.

As described above, a result of correcting coordinates on roll maps in a plurality of processes to match those on a surviving electrode in a final process and arranging resultant roll maps side by side to be seen at a glance is referred to as an overlay roll map. When such an overlay roll map is displayed on the display device 1300, the quality history or manufacturing history of the final surviving electrode can be grasped at a glance. Referring to FIG. 12, it can be seen from a (overlay) roll map of the roll press process that a battery manufactured using electrodes at asterisk points is derived from hatched electrodes with a roll-pressed thickness (e.g., a roll-pressed thickness in a normal range) in the roll press process. In addition, it can be seen from a roll map of the coating process that a battery manufactured using electrodes at asterisk points is derived from an electrode with an excessive amount of loading, which is coated with a coating material to a thickness that exceeds a normal range, in the coating process. For example, it may be determined based on manufacturing history of the coating process that when a battery manufactured using the electrodes at the asterisk points was ignited, there was a problem with the electrodes. Alternatively, the asterisk points may be portions that are defective in experience or other aspects. That is, when there was a problem with a removed electrode at an asterisk point due to an exterior defect, a portion of an electrode in an electrode manufacturing process that corresponds to a part corresponding to the exterior defect may be easily identified on the basis of the overlay roll map.

FIG. 13 is a diagram illustrating another example of processing coordinate data into processed coordinate data.

FIG. 13 illustrates an example of an overlay roll map based on processed coordinate data displayed by processing coordinate data while reflecting a change in a length of an electrode and a change in coordinate axes as described above.

In FIG. 13, an upper diagram is an overlay roll map when no surface inversion occurs between the coating process and the roll press process, and a lower diagram is an overlay roll map when a surface inversion occurs.

Referring to the upper diagram, surface inversion does not occur and thus a roll map I of a top surface T of an electrode in the coating process corresponds to a roll map III of the top surface T of the electrode in the roll press process.

In this case, a control logic '0' may be assigned to a processor of a second server or a controller or a computing device that manages an operation of the second server. That is, the roll map I of the top surface of the electrode which is displayed as T, in the coating process corresponds to the roll map III of the top surface of the electrode, which is displayed as T, in the roll press process. In this case, overlay roll maps I, III and V of the top surface of the electrode from the coating process to the notching process are provided to show quality and product history in each of the processes. Similarly, overlay roll maps II, IV, and V of a back surface B of the electrode are provided.

Referring to the lower diagram, surface inversion occurs and thus the roll map I of the top surface T of the electrode in the coating process corresponds to the roll map IV of the back surface B of the electrode in the roll press process. In this case, a control logic '1' may be assigned to the processor of the second server or the controller or the computing device that manages an operation of the second server. That is, the roll map I of the top surface of the electrode, which is displayed as T, in the coating process corresponds to the roll map IV of the back surface of the electrode, which is displayed as B, in the roll press process. In this case, overlay roll maps I, IV and V of the top surface of the electrode from the coating process to the notching process are provided to show quality and product history in each of the processes. Similarly, information about surface inversion is reflected with respect to the back surface B of the electrode and thus the roll map II of the back surface B of the electrode in the coating process corresponds to the roll map III of the top surface T of the electrode in the roll press process. Therefore, overlay roll maps II, III and V of the back surface B of the electrode are provided.

As described above, the second server 1220 may generate processed coordinate data by processing coordinate data in each process to correspond to a position of the same real electrode. In addition, an SCDS 1222 may be generated by connecting inspection data and/or measurement data to the processed coordinate data. FIGS. 12 and 13 illustrate a roll map or an overlay roll map that is an example of the SCDS 1222.

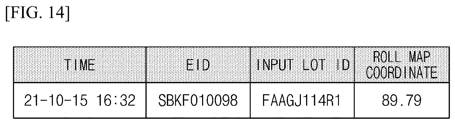

FIG. 14 is a diagram illustrating an example in which time series data is connected with an electrode ID and (roll map) coordinate data.

FIG. 14 shows an example of first electrode ID-related data EIDD1 in the notching process. FIG. 14 illustrates an electrode ID EID 'SBKF010098' in the notching process, and a coordinate (first coordinate) "89.79" on a roll map of a fourth electrode sheet in the notching process that corresponds to the electrode ID EID. In addition, a point in time when the electrode ID EID and the coordinate on the roll map were obtained, and a lot ID of the fourth electrode sheet are also illustrated. However, FIG. 14 is only an example, and the first electrode ID-related data EIDD1 may further include inspection data and/or measurement data at the point in time or additional process event data.

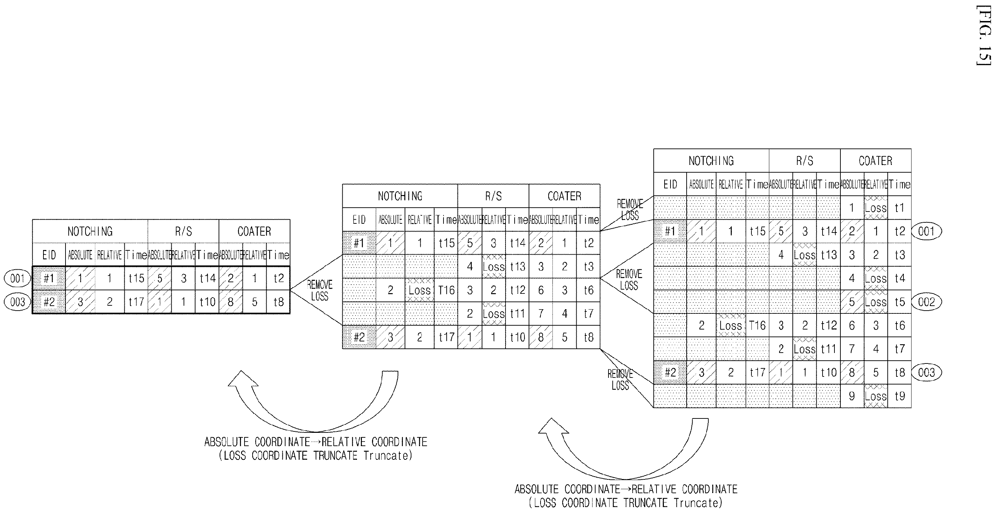

FIG. 15 exemplarily illustrates monitoring data generated by the monitoring system of the battery manufacturing system 10.

FIG. 15 is a diagram illustrating a process of processing coordinate data in the coating process, the roll press process (R/S), and a notching process while reflecting the inversion of a start and an end of an electrode and a loss of the electrode. In particular, FIG. 15 illustrates coordinate data and a point in time when the coordinate data was obtained (time series data). With respect to an electrode ID EID of a portion of a finally surviving electrode in the notching process after the processing of the coordinate data, coordinate data, time series data, and inspection data and/or measurement data in the notching process may be intuitively compared with those in the roll press process and the coating process (see a left diagram of FIG. 15).

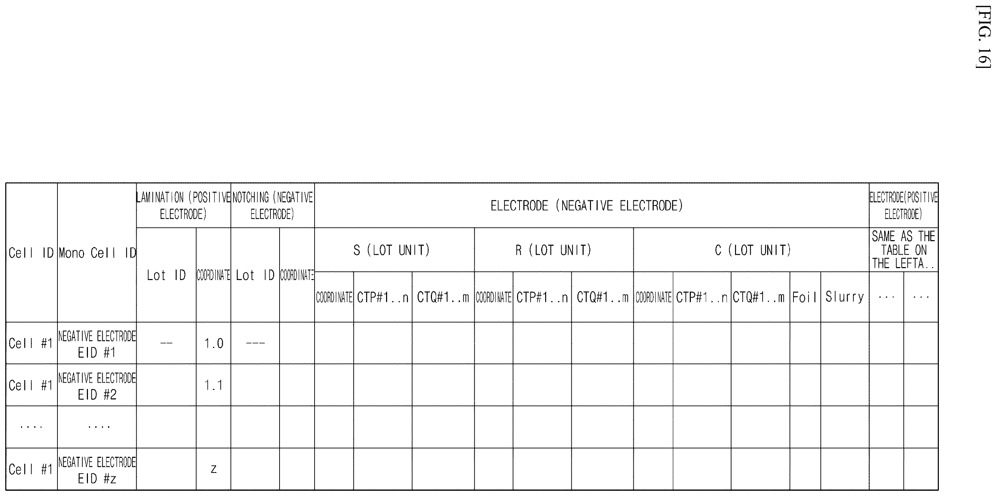

FIG. 16 illustrates another example of monitoring data generated by the monitoring system of the battery manufacturing system.

FIG. 16 illustrates an example of monitoring data for tracking back processes, including a process of completing a cell to a coating process.

For example, the completed cell may have an ID of #1 and include a plurality of mono-cells. An ID of each of the mono-cells may be an ID EID of a negative electrode cell included in the mono-cell. Therefore, IDs EID of a plurality of negative electrode cells may correspond to an ID of one completed cell.

The ID EID of each of the negative electrode cells may correspond to a coordinate of a negative electrode (sectional electrode) and a negative electrode lot ID in a lamination process. The coordinate of the negative electrode (sectional electrode) and the negative electrode lot ID may correspond to a coordinate of a certain position on a laminated positive electrode (sectional electrode) and a positive electrode lot ID in the lamination process .

The coordinates of the negative electrode and the positive electrode in the lamination process may correspond to a coordinate and a negative electrode lot ID in the notching process.

Coordinates in a slitting process, a roll press process, and the coating process that correspond to the coordinate and the lot ID in the notching process may be searched for from the above-described FCDS 1211 and the SCDS 1212. In addition, the coordinates in each of the processes are also related to equipment data (e.g., CTP data) and quality data (e.g., CTQ data) in a corresponding process.

Coordinates and various types of data as described above may be extracted not only with respect to a negative electrode but also a positive electrode coupled to the negative electrode in the lamination process.

As described above, according to the present invention, data related to manufacturing of a battery may be easily and quickly searched for throughout an entire battery manufacturing process.

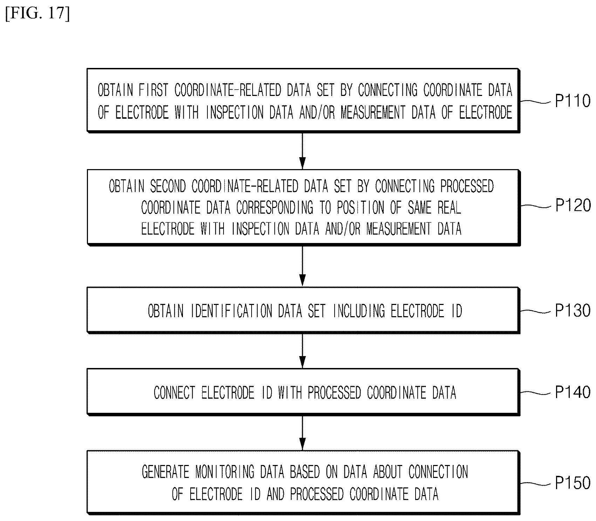

FIG. 17 is a flowchart of a method of monitoring a battery manufacturing process according to example embodiments.

Referring to FIGS. 2 and 17, in operation P110, an FCDS 1221 is obtained by associating coordinate data CD indicating lengthwise positions on an electrode (sheet) moved in a plurality of sub-processes with inspection data and/or measurement data of the electrode (sheet) obtained from the positions of the electrode (sheet) in the plurality of processes. The FCDS 1221 may be generated by the second server 1220. In this case, a FCDS-1 1232 may be generated by the third server 1230 by connecting or associating processed data of the inspection data and/or measurement data or some of the processed data with the coordinate data. The second server 1220 may generate the FCDS 1221 by integrating the FCDS-1 1232 with raw data of the inspection data and/or measurement data received from the eIoT 1150. The generated FCDS 1221 may be uploaded to the first server 1210 at certain periods of time.

In operation P120, a SCDS may be obtained by connecting processed coordinate data with the inspection data and/or measurement data obtained in a respective sub-process. The processed coordinate data may be obtained by matching the coordinate data in respective ones of the plurality of sub-processes with each other such that they indicate identical physical parts of the electrode. For example, the second server 1220 may generate processed coordinate data by processing the coordinate data as described above. In addition, the second server 1220 may generate an SCDS by connecting the processed coordinate data with the inspection data and/or measurement data in each process. The generated SCDS 1222 may be uploaded to the first server 1210 at certain periods of time.

In operation P130, an IDS including an electrode ID identifying the electrode may be obtained.

The fourth server may obtain first electrode ID-related data including a coordinate of the sectional electrode (e.g., a negative electrode) corresponding to the electrode ID in a respective sub-process (e.g., the notching process) of assigning the electrode ID among a plurality of sub-processes.

In addition, the fourth server may obtain second electrode ID-related data including at least one of a coordinate of the sectional electrode (e.g., a negative electrode) corresponding to the electrode ID in a sub-process of coupling other sectional electrodes to the sectional electrode (e.g., the lamination process) among the plurality of sub-processes or a coordinate of another sectional electrode (e.g., a positive electrode) coupled to the sectional electrode and corresponding to the electrode ID.

The fourth server 1240 may generate an IDS 1241 from the first electrode ID-related data, the second electrode ID-related data, the electrode ID, and pitch data. The generated IDS 1241 may be uploaded to the first server 1210 at certain periods of time.

In operation P140, the electrode ID EID selected from the IDS may be associated with processed coordinate data of the SCDS 1212 corresponding to the electrode ID. In this case, the monitoring method may further include associating or connecting processed coordinate data of a respective sub-process with coordinates included in the first electrode ID-related data and/or the second electrode ID-related data through the electrode ID. The first server 1210 may connect the electrode ID EID selected from the IDS 1213 with the processed coordinate data of the SCDS 1212 corresponding to the electrode ID.

In operation P150, the first server 1210 may generate monitoring data on the battery manufacturing process, based on the coordinate data associated with the electrode ID.

In this case, inter-process monitoring data may be generated. This may include mapping the processed coordinate data in one of the sub-processes, associated with the electrode ID, with processed coordinate data in another one of the sub-processes, associated with the electrode ID. Additionally, or alternatively, generating the inter-process monitoring data may include mapping the inspection data and/or measurement data obtained in one of the sub-process, associated with the electrode ID or the processed coordinate data, with inspection data and/or measurement data obtained in another one of the sub-processes, associated with the electrode ID or the processed coordinate data (see FIGS. 15 and 16).

Optionally, the processed coordinate data or the processed coordinate data related to the electrode ID may be additionally connected with at least a subset of equipment data obtained by process equipment and/or at least a subset of quality data related to quality of the electrode among the inspection data and/or the measurement data. To this end, the first server 1210 may further include an EDS 1214 and a QDS 1215.

Data sets included in the first server 1210 form a data mart, which is a simple form of a data warehouse that is focused on a single subject or line of business, that is, for the purpose of the present disclosure, a collection of data about an electrode manufacturing process. In particular, the data may be implemented in the form of a roll map in the electrode manufacturing process. In this regard, the above-described data sets of the first server 1210 may be referred to as a roll map data mart. For example, higher servers such as a data warehouse may include not only a data mart related to the electrode manufacturing process but also a mixer data mart related to data of a mixing process, an assembly data mart related to data of an assembly process, and activation data marts related to an activation process that is a subsequent process. The present invention provides breakthrough technology for implementing a data mart (roll map data mart) related to the electrode manufacturing process in a first server that is a higher server, and connecting the roll map data mart with other data marts to facilitate production management and quality control in the entire battery manufacturing process and secure quality traceability.

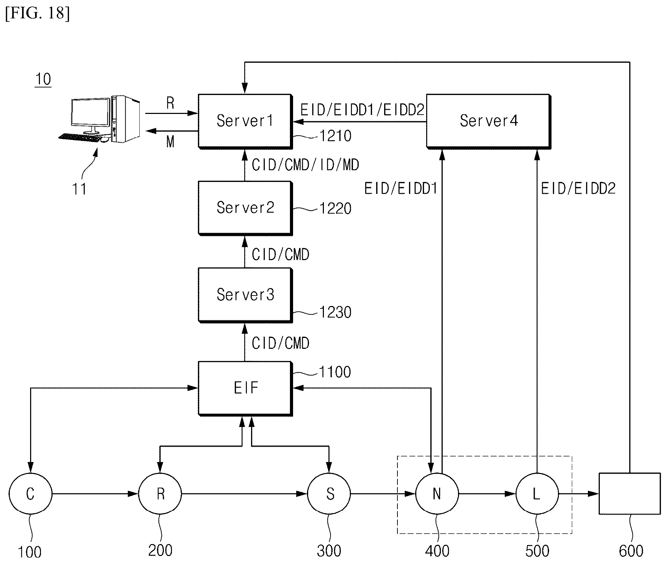

FIG. 18 illustrate a battery manufacturing system according to example embodiments.

An overall configuration of FIG. 18 is similar to that of FIG. 1. However, FIG. 18 is different from FIG. 1 in that a user device 11 is provided, instead of the display device 1300. The user device 11 may be configured to communicate with the battery manufacturing system 10, e.g., through wireless or wire-bound communication.

The user device 11 may be a device, e.g., a mobile device such as a workstation computer, a laptop computer, a desktop computer, a tablet PC, or a smart phone, or a wearable device, suitable for communication with a battery manufacturing system 10. The user device 11 may be configured to generate a request R to load monitoring data M of the battery manufacturing process. The user device 11 may include an input device configured to receive an input and, optionally, a display device for displaying the monitoring data M. Based on the input received through the input device, the request R may be generated by the user device 11. The input device may include, for example, a scanner, e.g., a bar code scanner, a keyboard, a touch sensitive display or similar.

The request R may be generated in response to inputting, as a search parameter, a battery product ID related to an electrode ID or any other type of information capable of identifying the battery product ID.

As described above, an electrode is manufactured by an electrode manufacturing process including a plurality of sub-processes such as a coating process, a roll press process, and a slitting process, and so forth. An electrode ID, EID, may be given to a part of the electrode (sheet), e.g., in a notching process, corresponding to a sectional electrode which is obtained by cutting off a lengthwise section from the electrode (sheet) after the notching process. The sectional electrode to which the electrode ID, EID, is given may be coupled with another electrode by a coupling process (e.g., a lamination process or a winding process performed by a winder). A unit electrode cell, such as a mono cell or a bi-cell, may be formed by processing electrodes in the lamination process. After the lamination process, a battery assembly including such unit electrode cells is manufactured by a subsequent process device 600. An additional ID for identifying the battery assembly may be given to the manufactured battery assembly. The additional ID may be associated with the electrode IDs for respective sectional electrodes constituting the corresponding battery assembly. Therefore, any measured/detected/identified/recorded event in a battery manufacturing process, which has been already associated with a corresponding electrode ID, may be traced down by identifying the additional ID.

A battery cell as a finished product, a battery module including the battery cell, and a battery pack including either the battery cell or the battery module may perform the respective function in a manner satisfying the purpose of its own use; and thus, each of them may be referred to as a battery product.

The unit cells are battery semi-finished products. A battery assembly in between a unit cell manufacturing process and a finished battery cell manufacturing process may be considered as a battery semi-finished product. For example, an electrode assembly such as a stack cell obtained by stacking unit cells or a folding cell obtained by folding unit cells may be an example of the battery semi-finished product. A jelly roll type electrode assembly obtained by winding a positive electrode and a negative electrode with a separator interposed therebetween may also be a battery semi-finished product. In addition, all battery assemblies (e.g., packaging cells) obtained by inserting the electrode assembly into a battery housing, injecting an electrolyte into the housing, and performing the activation process may also be battery semi-finished products. These battery semi-finished products may become a finished battery cell, once the activation process has been performed, which imparts certain electrical characteristics thereto.

In FIG. 18, the subsequent process device 600 may be a representative example of devices that perform several subsequent processes after the lamination process. As shown in FIG. 18, process event data generated in at least one of a stacking process, a folding process, a housing insertion process, an injection process, the activation process, a modularization process, and a pack process may also be transmitted to the servers 1230, 1220, and 1210. The process event data on these subsequent processes may be generated by the subsequent process devices 600 and/or respective controllers controlling the respective subsequent process devices 600.

Unique identification information (ID) indicating each process may be given to a battery semi-finished product and/or a battery product manufactured in each subsequent process. Such identification information may be associated with process event data obtained in each subsequent process.

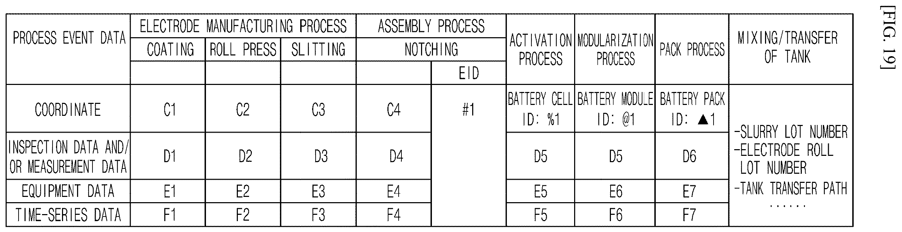

FIG. 19 is a schematic diagram illustrating an example of process event data associated with an electrode ID, EID, and/or a battery product ID.

It is described above with reference to FIG. 16 that an ID of a finished battery cell, an ID of a mono cell in the battery cell, an ID of a negative electrode in the mono cell, and coordinate data corresponding to a real, or sectional, electrode in an electrode manufacturing process corresponding to the ID of the negative electrode may be related to one another.

FIG. 19 illustrates that an ID (%1) of a battery cell manufactured by the activation process, a module ID (@1) of a battery module including such battery cells, a pack ID (▲1) of a battery pack including the battery cells or the battery module, and the electrode ID, EID, are related to or associated with one another. The form of each ID illustrated in FIG. 19 is only an example and embodiments are not limited thereto.

An electrode ID and an ID of each semi-finished product or a product may be numbers, characters, various types of symbols, or a combination thereof. Generally, the electrode ID identifies a respective sectional electrode, and an ID of a respective semi-finished product or product identifies the semi-finished product or product. The IDs may include symbols, such as barcode or QR code, which can be electronically scanned but are not limited thereto.

As shown in FIG. 19, process event data obtained in a respective process of manufacturing a battery semi-finished product and a battery product may be associated with a respective ID and stored in the first server 1210. In addition, an ID of a semi-finished product or product in a respective process may be associated with an electrode ID, EID, of one or more sectional electrodes included in the semi-finished product or product and stored in the first server 1210. Therefore, when an ID of a battery semi-finished product or an ID of a battery product is known, the first server 1210 may be requested to derive an electrode ID of at least one electrode in the battery semi-finished product or battery product. The first server 1210 may derive an electrode ID related to or associated with a battery product ID from an identification data set IDS:1213 stored in the first server 1210.

Accordingly, information about the electrode related to the electrode ID in at least one process, among a plurality of processes of producing an electrode, may be derived. The plurality of processes of producing an electrode include a plurality of sub-processes (e.g., the coating process, the roll press process, and the slitting process) in which an electrode sheet is moved while certain treatments are performed on the electrode sheet. That is, the plurality of processes of producing an electrode sheet include previous processes performed before the electrode sheet is cut into electrode parts to produce an electrode (in a narrow sense / sectional electrode). In addition, the plurality of processes of producing an electrode may include the notching process, in which an electrode ID is assigned to a lengthwise section of the electrode sheet corresponding to the to-be-cut sectional electrode, and the lamination process of forming a mono cell by cutting the electrode sheet by a cutter and combining the cut sectional electrode with another sectional electrode and a separator.

The information about the electrode may include coordinate data related to or associated with the electrode ID. The coordinate data may indicate a position of an electrode sheet or a sectional electrode within the electrode sheet being moved in the plurality of processes.

As shown in FIG. 16, coordinate data indicating the position of each electrode in an electrode manufacturing process associated with the electrode ID may be derived. The first server 1210 may derive coordinate data corresponding to the electrode ID from a first coordinate-related data set FCDS:1221, a 1-1 coordinate-related data set FCDS-1, and a second coordinate-related data set SCDS:1222 stored in the first server 1210. In addition, process event data related to the electrode ID and/or the coordinate data may be derived from a data mart stored in the first server 1210, e.g., the first coordinate-related data set FCDS:1221, the 1-1 coordinate-related data set FCDS-1, the second coordinate-related data set SCDS:1222, an equipment data set EDS, and a quality data set QDS. Such process event data may also be included in the information about the electrode.

Specifically, the process event data may include at least one of inspection data and/or measurement data of each electrode, time-series data indicating a point in time when each piece of data was obtained, and equipment data obtained from each piece of process equipment for manufacturing an electrode.

Referring back to FIG. 18, when, for example, an ID of a certain battery pack is input as a search parameter to the user device 11, a request R to load monitoring data M of a battery manufacturing process related to the battery pack is generated and transmitted to the battery manufacturing system 10, i.e., to the first server 1210. Inputting of the search parameter may, for example, include scanning an ID including barcode or QR code. By electronically scanning the ID, a search parameter is input to the user device. The user device may include a certain application program that converts an electronically scanned signal into a search parameter. Alternatively, a user may directly input characters, numbers, symbols or the like indicating the ID to generate the request R to load the monitoring data M.

According to the request R, the first server 1210 may control at least one processor to execute instructions to derive IDs of a battery product (a battery module or a battery cell) included in the battery pack, a battery semi-finished product (an electrode assembly or a unit cell), and (sectional) electrodes included in the battery semi-finished product. In addition, data (process event data) related to process events occurring in manufacturing processes of the battery product, the battery semi-finished product, and the electrodes may be derived. Accordingly, the first server 1210 may generate monitoring data M in which IDs and process event data on one or more of the plurality of process are connected or associated with each other, for example, as shown in the diagrams of FIGS. 16 and 19.

When an ID of another battery product, e.g., an ID of a battery module, related to an electrode ID is input, IDs of a battery product (a battery cell) included in the battery module, a battery semi-finished product (an electrode assembly or unit cell), electrodes included in the battery semi-finished product, and process event data corresponding thereto may be derived. Therefore, the first server 1210 may generate monitoring data M related to manufacturing processes of inner components of a corresponding battery module in relation to a specific battery module.

When an ID of another battery product, e.g., an ID of a battery cell, related to an electrode ID is input, an ID of a battery semi-finished product (an electrode assembly or unit cell) included in the battery cell, IDs of electrodes included in the battery semi-finished product, and process event data corresponding thereto may be derived. Therefore, the first server 1210 may generate monitoring data M related to manufacturing processes of inner components of a corresponding battery cell in relation to a specific battery cell.

Meanwhile, by inputting an ID of a specific battery product as a search parameter, not only monitoring data M regarding a battery product at a lower end of the battery product but also monitoring data M of a battery product at an upper end of the battery product may be obtained. For example, by inputting an ID of a battery cell as a search parameter, not only monitoring data related to a manufacturing process of inner components of the battery cell but also monitoring data related to a battery module including the battery cell and a battery pack are generated, and thus, a user may receive the monitoring data.

In addition to an ID of a battery product, information related to the ID of the battery product may also be used as a search parameter. For example, unique identification information may be given to a place (e.g., a factory) or an object (e.g., an energy storage system (ESS) or an electric vehicle) in which the battery product is installed. The identification information may be stored in a database or another management server in connection with a pack ID of a battery pack installed in the place or the object. Therefore, it is possible to allow the first server 1210 to generate a request R to load monitoring data M of a battery manufacturing process by inputting, as a search parameter, information related to an ID of a battery product, e.g., identification information of a place or object in which the battery product is installed, in addition to directly inputting an ID of the battery product as a search parameter.

In response to the request R, the first server 1210 may transmit the generated monitoring data M to the user device 11. The first server 1210 may be configured to generate an application programming interface (API) call in response to the request R. The API call may include information for identifying process event data, such as coordinate data, inspection data, and/or measurement data related to the electrode ID. The first server 1210 may transmit the API call to other servers, e.g. to one or more of the second to fourth servers 1220, 1230, 1240.

The user device 11 may receive the monitoring data M of the battery manufacturing process from the first server 1210. The monitoring data M includes the monitoring data M of the battery manufacturing process related to the electrode ID given to at least one sectional electrode included in the battery product. The monitoring data M may include coordinate data associated with the electrode ID, which is coordinate data indicating the position of each sectional electrode moved in the plurality of processes.

The user device 11 may display the received monitoring data M on the optional display device or the like.

Accordingly, a user may identify various process events occurring in the battery process, based on the monitoring data M.

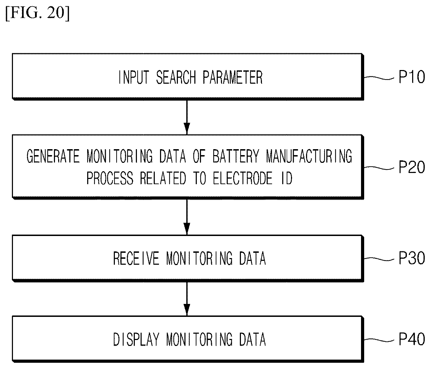

FIG. 20 is a flowchart of a process event tracking method in a battery manufacturing process according to example embodiments.

Referring to FIGS. 18 and 20, in operation P10, a search parameter may be input. The search parameter may be an ID of a battery product associated with an electrode ID or information related to the ID of the battery product. The search parameter may be input by the user device 11, for example, as described above. By inputting the search parameter, a request R to load monitoring data M of a battery manufacturing process to the user device 11 or the like may be generated by the user device 11 and transmitted to the first server 1210, e.g., using a communication network such as Ethernet, WiFi, or similar.

In operation P20, a server, e.g., the first server 1210, may generate, in response to receiving the request R, monitoring data M of a battery manufacturing process related to the electrode ID given to at least one (sectional) electrode included in the battery product, based on the search parameter. The first server 1210 may generate an API call in response to the request R. To generate the monitoring data M, the first server 1210 may transmit the API call to other servers, e.g., to one or more of the second to fourth servers 1220, 1230, 1240.

The monitoring data M may include information about the electrode related to the electrode ID in at least one process among a plurality of processes of producing an electrode, as described above.

The information about the electrode may include coordinate data associated with the electrode ID. The coordinate data may indicate a position of an electrode sheet or the (sectional) electrode moved in the plurality of processes.

The coordinate data may be processed coordinate data obtained by processing coordinate data in each process to correspond to the position of the same real electrode. The first server 1210 may extract processed coordinate data from, for example, the second coordinate-related data set SCDS:1222 and connect the extracted processed coordinate data with the electrode ID. Accordingly, the position of the real electrode in each process may be detected from the electrode ID related to the ID of the battery product. Details on how processed coordinate data may be obtained are described above, particularly, in connection with a SCDS 1222.

The first server 1210 may extract not only the coordinate data related to the electrode ID but also process event data related to the electrode ID and/or the coordinate data from a data mart including data sets stored in the first server 120, and include the extracted data in the monitoring data M. The process event data may also form part of the information about the electrode.

The process event data may include at least one of inspection data and/or measurement data of each electrode, time-series data indicating a point in time when each piece of data was obtained, and equipment data obtained from each piece of process equipment for manufacturing an electrode.

The monitoring data M may include inter-process monitoring data comparing processed coordinate data of an electrode in one process with processed coordinate data of the electrode in another process. In addition, the monitoring data M may include inter-process monitoring data comparing first process event data related to the processed coordinate data of the electrode in one process with second process event data related to the processed coordinate data of the electrode in another process. Generally, in the inter-process monitoring data the processed coordinate data in one of the sub-processes, associated with the electrode ID, may be mapped with processed coordinate data in another one of the sub-processes, associated with the electrode ID, and/or inspection data and/or measurement data obtained in one of the sub-processes, associated with the electrode ID or the processed coordinate data, may be mapped with inspection data and/or measurement data obtained in another one of the sub-processes, associated with the electrode ID or the processed coordinate data. The first server 1210 may generate the inter-process monitoring data from data of a data mart including data sets stored in the first server 1210.

The server 1210 may connect or associate an ID of a battery semi-finished product (e.g., a mono cell) with the electrode ID and/or coordinate data corresponding to the electrode ID, based on data of the data mart including data sets stored in the first server 1210. Accordingly, the ID of the battery semi-finished product and/or information about the ID of the battery semi-finished product related to the electrode ID may also be included in the monitoring data M.

The first server 1210 may transmit the generated monitoring data M to the outside, particularly, to the user device 11.

In operation P30, the user device 11 may receive the monitoring data M transmitted from the first server 1210.

In operation P40, the user device 11 may display the received monitoring data M. The user device 11 may include display devices to display the monitoring data M.

As described above, according to the present invention, in order to analyze the quality of a battery product or identify the cause of a defect, a process event in a battery manufacturing process can be easily identified by inputting an ID of the battery product ID, if necessary.

According to the present invention, a data mart can be configured with data about an electrode manufacturing process, and process event data in a battery manufacturing process can be easily obtained using data collected in the data mart. Accordingly, it is possible to easily detect an event causing a defect in the battery manufacturing process or a position (coordinates) of an electrode in which the defect occurs.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

The present invention further may include one or more of the following items:

Item 1: A system for monitoring a battery manufacturing process, comprising:

a first server configured for storing a first coordinate-related data set in which coordinate data indicating lengthwise positions on an electrode are associated with inspection data and/or measurement data obtained from the positions of the electrode being subject to a plurality of manufacturing sub-processes, and an identification data set including an electrode identifier, ID, identifying a respective sectional electrode that has been obtained by cutting off a lengthwise section from the electrode;

a memory storing instructions; and
at least one processor configured to execute the instructions stored in the memory to perform operations of:

1) associating an electrode ID selected from the identification data set with the coordinate data of the first coordinate-related data set representing the lengthwise section of the electrode from which the sectional electrode identified by the electrode ID has been obtained; and

2) generating monitoring data on the battery manufacturing process based on the coordinate data associated with the electrode ID.

Item 2: The system of item 1, wherein the first coordinate-related data set comprises at least one of:

electrode lot data indicating a material of the electrode;
raw data of the inspection data and/or the measurement data; or
processed data of the inspection data and/or the measurement data.

Item 3: The system of item 1 or 2, wherein the first server is further configured to store a second coordinate-related data set in which processed coordinate data is associated with the inspection data and/or the measurement data obtained in a respective one of the plurality of sub-processes, the processed coordinate data being obtained by matching the coordinate data in respective ones of the plurality of sub-processes with each other such that they indicate identical physical parts of the electrode.

Item 4: The system of item 3, wherein the processed coordinate data is generated from the coordinate data by at least one of:

1) correcting, when the coordinate data is inverted due to inversion of positions of a start portion and an end portion of the electrode in a respective sub-process, the inverted coordinate data to be matched with the coordinate data in the preceding and following sub-processes;
2) correcting, when the coordinate data is inverted due to inversion of a corresponding surface of the electrode between subsequent sub-processes according to a direction of winding the electrode and a direction of unwinding the electrode, the inverted coordinate data to be matched with the coordinate data in the preceding and following sub-processes; and
3) correcting, when the coordinate data is changed due to an electrode loss occurring in a respective sub-process and/or between subsequent sub-processes, the changed coordinate data to be matched with the coordinate data in the preceding and following sub-processes.

Item 5: The system of item 3 or 4, wherein the operations further include associating the processed coordinate data of the second coordinate-related data set with a corresponding electrode ID selected from the identification data set.

Item 6: The system of item 5, wherein the operation of generating the monitoring data includes generating inter-process monitoring data by:

mapping the processed coordinate data in one of the sub-processes, associated with the electrode ID, with processed coordinate data in another one of the sub-processes, associated with the electrode ID; and/or
mapping inspection data and/or measurement data obtained in one of the sub-processes, associated with the electrode ID or the processed coordinate data, with inspection data and/or measurement data obtained in another one of the sub-processes, associated with the electrode ID or the processed coordinate data.

Item 7: The system of any one of the preceding items, wherein the identification data set further comprises at least one of:

1) first electrode ID-related data including coordinate value(s) on the electrode in one of the plurality of sub-processes in which the electrode ID is assigned, the coordinate value(s) representing a lengthwise section of the electrode from which the sectional electrode identified by the electrode ID has been obtained;
2) second electrode ID-related data including at least one of:

coordinate value(s) on the electrode in one of the plurality of sub-processes in which the sectional electrode and another sectional electrode are coupled, the coordinate value(s) representing a lengthwise section of the electrode from which the sectional electrode identified by the electrode ID has been obtained, or coordinate value(s) on another electrode in said sub-process in which the sectional electrode identified by the electrode ID and the another sectional electrode are coupled, the coordinate value(s) representing a lengthwise section of another electrode from which the another sectional electrode has been obtained; or

3) pitch data indicating a length of the sectional electrode and/or a length of the another sectional electrode.

Item 8: The system of item 7, insofar as being dependent upon item 3, wherein the operations further include: associating the processed coordinate data in a respective one of the plurality of sub-processes with coordinate value(s) included in the first electrode ID-related data and/or the second electrode ID-related data through the electrode ID.
Item 9: The system of any one of the preceding items, wherein the first server is further configured to store at least one of:

1) an equipment data set obtained from a process equipment physically interacting with the electrode and/or the sectional electrode during any one of the plurality of sub-processes; or
2) a quality data set related to quality of the electrode, among the inspection data and/or measurement data.

Item 10: The system of item 9, insofar as dependent upon item 3, wherein the operations further include:

associating the coordinate data and/or the processed coordinate data associated with the electrode ID with equipment data of the equipment data set and/or quality data of the quality data set, and wherein the operation of generating the monitoring data comprises generating monitoring data, based on the coordinate data and/or the processed coordinate data associated with the electrode ID and the equipment data and/or quality data.

Item 11: The system of any one of the preceding items, wherein at least some of the data sets stored in the first server further comprises time series data indicating a point of time at which data included in the data sets has been obtained.
Item 12: The system of any one of items 3 to 11, insofar as dependent upon item 3, further comprising: a second server configured to generate the first coordinate-related data set and/or the second coordinate-related data set and upload the first coordinate-related data set and/or the second coordinate-related data set to the first server.
Item 13: The system of item 12, further comprising:

a third server configured to generate a compressed coordinate-related data set by associating processed data of the inspection data and/or the measurement data or a subset of the processed data of the inspection data and/or the measurement data with the coordinate data and transmit the compressed coordinate-related data set to the second server,
wherein the second server is configured to integrate the compressed coordinate-related data set into the first coordinate-related data set.

Item 14: The system of any one of the preceding items, further comprising:
a fourth server configured to generate the identification data set and upload the identification data set to the first server.
Item 15: The system of any one of items 3 to 14, insofar as dependent upon item 3, wherein the first coordinate-related data set and/or the second coordinate-related data set is or includes a roll map data set indicating characteristics of a material of the electrode on the basis of the coordinate data or the processed coordinate data.
Item 16: A method for monitoring a battery manufacturing process, comprising:

obtaining a first coordinate-related data set by associating coordinate data indicating lengthwise positions on an electrode with inspection data and/or measurement data obtained from the positions of the electrode being subjected to a plurality of manufacturing sub-processes;

obtaining an identification data set including an electrode identifier, ID, identifying a respective sectional electrode that has been obtained by cutting off a lengthwise section from the electrode;

associating an electrode ID selected from the identification data set with the coordinate data of the first coordinate-related data set representing the lengthwise section of the electrode from which the sectional electrode identified by the electrode ID has been obtained; and

generating monitoring data on the battery manufacturing process, based on the coordinate data associated with the electrode ID.

Item 17: The method of item 16, further comprising:

obtaining processed coordinate data by matching the coordinate data in respective ones of the plurality of sub-processes with each other such that they indicate identical physical parts of the electrode; and

obtaining a second coordinate-related data set by associating the processed coordinate data with the inspection data and/or the measurement data obtained in a respective one of the plurality of sub-processes.

Item 18: The method of item 17, further comprising:

associating the processed coordinate data of the second coordinate-related data set with a corresponding electrode ID selected from the identification data set,

wherein the monitoring data is generated based on the processed coordinate data associated with the electrode ID.

Item 19: The method of item 18, wherein generating the monitoring data includes generating inter-process monitoring data by:

mapping the processed coordinate data in one of the sub-processes, associated with the electrode ID, with processed coordinate data in another one of the sub-processes, associated with the electrode ID; and/or

mapping the inspection data and/or measurement data obtained in one of the sub-process, associated with the electrode ID or the processed coordinate data, with inspection data and/or measurement data obtained in another one of the sub-processes, associated with the electrode ID or the processed coordinate data.

Item 20: The method of any one of items 17 to 19, wherein the identification data set further comprises at least one of:

1) first electrode ID-related data including coordinate value(s) on the electrode in one of the plurality of sub-processes in which the electrode ID is assigned, the coordinate value(s) representing a lengthwise section of the electrode from which the sectional electrode identified by the electrode ID has been obtained;

2) second electrode ID-related data including at least one of:

coordinate value(s) on the electrode in one of the plurality of sub-processes in which the sectional electrode and another sectional electrode are coupled, the coordinate value(s) representing a lengthwise section of the electrode from which the sectional electrode identified by the electrode ID has been obtained, or

coordinate value(s) on another electrode in said sub-process in which the sectional electrode identified by the electrode ID and the another sectional electrode are coupled , the coordinate value(s) representing a lengthwise section of another electrode from which the another sectional electrode has been obtained; or

3) pitch data indicating a length of the sectional electrode and/or a length of the another sectional electrode,

wherein the method further includes associating the processed coordinate data in a respective one of the plurality of sub-processes with coordinate value(s) included in the first electrode ID-related data and/or the second electrode ID-related data through the electrode ID.

Item 21: The method of any one of items 17 to 19, further comprising:

obtaining an equipment data set from a process equipment physically interacting with the electrode and/or the sectional electrode during any one of the plurality of sub-processes, and/or obtaining a quality data set related to quality of the electrode, among the inspection data and/or measurement data; and

associating the coordinate data and/or the processed coordinate data associated with the electrode ID with equipment data of the equipment data set and/or quality data of the quality data set.

Item 22: A method for tracking a process event in a battery manufacturing process, the method comprising:

inputting, by means of a user device, a search parameter which is a battery product identifier, ID, related to an electrode ID or information representing the battery product ID, the electrode ID identifying a sectional electrode that has been obtained by cutting off a lengthwise section from an electrode;

transmitting the search parameter to a server; and

receiving, from the server, monitoring data of the battery manufacturing process related to the electrode ID, the monitoring data being generated or obtained by the server based on the search parameter,

wherein the monitoring data comprises information about the sectional electrode identified by the electrode ID in at least one sub-process among a plurality of manufacturing sub-processes to which an electrode, from which the sectional electrode has been obtained, was subject to.

Item 23: The method of item 22, wherein the information about the sectional electrode comprises coordinate data associated with the electrode ID, and the coordinate data represents lengthwise positions on the electrode subject to the plurality of sub-processes, wherein the electrode ID is associated with coordinate data representing the lengthwise section of the electrode from which the sectional electrode identified by the electrode ID has been obtained.

Item 24: The method of item 22 or 23, wherein the information related to the battery product ID comprises identification information of a place or an object in which a battery product is installed.

Item 25: The method of any one of items 22 to 24, further comprising displaying, by a display device, the received monitoring data.

Item 26: The method of any one of items 22 to 25, wherein the battery product ID comprises at least one of a battery pack ID, a battery module ID, and a battery cell ID.

Item 27: The method of any one of items 23 to 26 insofar as being dependent upon item 23, wherein the coordinate data comprises processed coordinate data obtained by matching the coordinate data in respective ones of the plurality of sub-processes with each other such that they indicate identical physical parts of the electrode.

Item 28: The method of any one of items 22 to 27, wherein the information about the sectional electrode comprises process event data associated with the electrode ID and/or the coordinate data.

Item 29: The method of item 28, wherein the process event data comprises at least one of inspection data and/or measurement data acquired for the sectional electrode, time-series data indicating a point in time when each piece of data is obtained, and equipment data obtained from process equipment physically interacting with the electrode and/or the sectional electrode during any one of the plurality of sub-processes.

Item 30: The method of any one of items 23 to 29, insofar as being dependent upon item 23, wherein the monitoring data includes inter-process monitoring data in which:

the processed coordinate data in one of the sub-processes, associated with the electrode ID, is mapped with processed coordinate data in another one of the sub-processes, associated with the electrode ID; and/or

inspection data and/or measurement data obtained in one of the sub-processes, associated with the electrode ID or the processed coordinate data, is mapped with inspection data and/or measurement data obtained in another one of the sub-processes, associated with the electrode ID or the processed coordinate data.

Item 31: The method of any one of items 22 to 30, wherein the monitoring data further comprises information about an ID of a battery semi-finished product associated with the battery product ID and/or the electrode ID.

Item 32: The method of any one of items 22 to 31, wherein the method is carried out using the system of any one of items 1 to 15, and wherein the server includes the first server.

[List of Reference Numbers]

10: battery manufacturing system

11: user device

100: coating device

200: roll pressing device

300: slitting device

400: notching device

500: lamination devices

600: subsequent process device

1100: EIF

1210: first server, 1220: second server, 1230: third server, 1240: fourth server

1300: display device

**Claims**

1. A method of tracking a process event in a battery manufacturing process, the method comprising:

   inputting, as a search parameter, a battery product identifier, ID, related to an electrode ID, which is an identification mark of the electrode or information related to the battery product ID; and
   receiving monitoring data of the battery manufacturing process related to the electrode ID, based on the search parameter,
   wherein the monitoring data comprises information about an electrode related to the electrode ID in at least one process among a plurality of processes of producing an electrode,
   wherein the monitoring data comprises a roll map including roll map coordinates related to the electrode ID in each of the plurality of processes,
   wherein the roll map comprises a visual image in which the roll map coordinates in the plurality of processes are matched and aligned in parallel.

2. The method of claim 1, wherein the information about the electrode comprises coordinate data related to the electrode ID, and the coordinate data represents a position of the electrode moved in the plurality of processes.

3. The method of claim 1, wherein the information related to the battery product ID comprises identification information of a place or an object in which a battery product is installed.

4. The method of claim 1, further comprising displaying the received monitoring data.

5. The method of claim 1, wherein the battery product ID comprises at least one of a battery pack ID, a battery module ID, and a battery cell ID.

6. The method of claim 2, wherein the coordinate data comprises processed coordinate data obtained by processing coordinate data in each process to correspond to a position of the same real electrode.

7. The method of claim 2, wherein the information about the electrode comprises process event data related to at least one of the electrode ID and the coordinate data.

8. The method of claim 7, wherein the process event data comprises at least one of inspection data of each electrode, measurement data of each electrode, time-series data indicating a point in time when each piece of data is obtained, and equipment data obtained from each piece of process equipment for manufacturing an electrode.

9. The method of claim 7, wherein the monitoring data comprises inter-process monitoring data comparing processed coordinate data of the electrode in one process with processed coordinate data of the electrode in another process.

10. The method of claim 1, wherein the monitoring data further comprises information about an ID of a battery semi-finished product related to the battery product ID or the electrode ID.

**11.** A battery manufacturing system comprising:

a first server configured to store a first coordinate-related data set in which coordinate data indicating a position of an electrode moved in a plurality of processes is connected with at least one of inspection data and measurement data of the electrode obtained in the plurality of processes, and an identification data set including an electrode identifier, ID, which is an identification mark of the electrode;
a memory storing instructions; and
at least one processor,
wherein the at least one processor is configured to execute the instructions to perform operations of:

1) connecting the electrode ID selected from the identification data set with the coordinate data of the first coordinate-related data set corresponding to the electrode ID; and
2) generating monitoring data for manufacturing a battery, based on data about the connection of the electrode ID with the coordinate data,

wherein the monitoring data comprises a roll map including roll map coordinates related to the electrode ID in each of the plurality of processes,
wherein the roll map comprises a visual image in which the roll map coordinates in the plurality of processes are matched and aligned in parallel.

**12.** The battery manufacturing system of claim 11, wherein the first coordinate-related data set comprises at least one of:

electrode lot data indicating an electrode material;
at least one of processed data of the inspection data and the measurement data; or
raw data of at least one of the inspection data and the measurement data.

**13.** The battery manufacturing system of claim 11, wherein the first server is further configured to store a second coordinate-related data set in which processed coordinate data, which is obtained by processing the coordinate data in each of the plurality of processes to correspond to a position of the same real electrode, is connected with at least one of the inspection data and the measurement data in each of the plurality of processes.

**14.** The battery manufacturing system of claim 13, wherein the coordinate data is processed into the processed coordinate data by at least one of:

1) when the coordinate data is inverted due to inversion of positions of a start and end of the electrode in the processes, correcting the inverted coordinate data to be the same in the processes;
2) when the coordinate data is inverted due to inversion of a corresponding surface of the electrode between the processes according to a direction of winding the electrode and a direction of unwinding the electrode, correcting the inverted coordinate data to be the same in the processes; and
3) when the coordinate data is changed due to an electrode loss occurring between the processes, correcting the changed coordinate data to be the same in the processes.

**15.** The battery manufacturing system of claim 13, wherein the operations further comprise connecting the processed coordinate data with the electrode ID selected from the identification data set.

**16.** The battery manufacturing system of claim 15, wherein the generating of the monitoring data comprises generating inter-process monitoring data by comparing the processed coordinate data in each of the processes related to the electrode ID with at least one of inspection data and measurement data in each of the processes related to the electrode ID and the processed coordinate data in the plurality of processes.

**17.** The battery manufacturing system of claim 14, wherein the identification data set further comprises at least one of:

1) first electrode ID-related data including a coordinate of the electrode corresponding to the electrode ID in a process in which the electrode ID is assigned among the plurality of processes;
2) second electrode ID-related data including at least one of the coordinate of the electrode corresponding to the electrode ID and a coordinate of another electrode coupled to the electrode and corresponding to the electrode ID in a process of coupling the electrode and the other electrodes among the plurality of processes; or
3) pitch data indicating a length of the electrode and a length of the other electrode coupled to the electrode.

18. The battery manufacturing system of claim 17, wherein the operations further comprise connecting the processed coordinate data in each of the processes with coordinates included in at least one of the first electrode ID-related data and the second electrode ID-related data through the electrode ID.

19. The battery manufacturing system of any one of claims 11 to 18, wherein the first server further comprises at least one of:

> 1) an equipment data set obtained from each of a plurality of pieces of process equipment for manufacturing an electrode; or
> 2) a quality data set related to quality of the electrode among at least one of the inspection data and measurement data.

20. The battery manufacturing system of claim 19, wherein each data set stored in the first server further comprises time series data indicating a point in time when data included in the data sets has been obtained, wherein the data included in the data set is related to the time series data corresponding to the data.

21. The battery manufacturing system of claim 20, wherein the operations further comprises connecting at least one of the coordinate data and the processed coordinate data related to the electrode ID with equipment data or quality data, and the generating of the monitoring data comprises generating monitoring data, based on data about connection of the electrode ID, at least one of the coordinate data and the processed coordinate data, and the equipment data or quality data.

22. The battery manufacturing system of claim 14, further comprising:
a second server configured to generate at least one of the first coordinate-related data set and the second coordinate-related data set and upload at least one of the first coordinate-related data set and the second coordinate-related data set to the first server.

23. The battery manufacturing system of claim 22, further comprising:

> a third server configured to generate a 1-1 coordinate-related data set by connecting processed data of at least one of the inspection data and the measurement data or some of the processed data with the coordinate data and transmit the 1-1 coordinate-related data set to the second server,
> wherein the second server is configured to integrate the 1-1 coordinate-related data set into the first coordinate-related data set.

24. The battery manufacturing system of claim 17, further comprising:
a fourth server configured to generate the identification data set and upload the identification data set to the first server.

25. The battery manufacturing system of claim 13, wherein at least one of the first coordinate-related data set and the second coordinate-related data set is a roll map data set indicating characteristics of a material of a real electrode on the basis of the coordinate data or the processed coordinate data, or comprises the roll map data set.

26. A battery manufacturing method comprising:

> obtaining a first coordinate-related data set by connecting coordinate data indicating a position of each electrode moved in a plurality of processes with at least on of inspection data and measurement data of the electrode obtained in each of the plurality of processes;
> obtaining an identification data set including an electrode identifier, ID, which is an identification mark of the electrode;
> connecting an electrode ID selected from the identification data set with coordinate data of the first coordinate-related data set corresponding to the electrode ID; and
> generating monitoring data for manufacturing a battery, based on data of the connection of the electrode ID and the coordinate data,
> wherein generating the monitoring data for manufacturing a battery comprises generating a roll map including roll map coordinates related to the electrode ID in each of the plurality of processes,
> wherein the roll map comprises a visual image in which the roll map coordinates in the plurality of processes are matched and aligned in parallel.

27. The battery manufacturing method of claim 26, further comprising:
obtaining a second coordinate-related data set by connecting processed coordinate data, which is obtained by processing the coordinate data in each of the plurality of processes to correspond to a position of the same real electrode, with at least one of the inspection data and the measurement data in each of the plurality of processes.

28. The battery manufacturing method of claim 27, wherein the generating of the monitoring data comprises generating inter-process monitoring data by comparing the electrode ID and the processed coordinate data in each of the processes related to the electrode ID with at least one of the inspection data and measurement data in each of the processes related to the electrode ID and the processed coordinate data in the plurality of processes.

29. The battery manufacturing method of claim 28, wherein the identification data set further comprises at least one of:

1) first electrode ID-related data including a coordinate of the electrode corresponding to the electrode ID in a process of assigning the electrode ID among the plurality of processes; or
2) second electrode ID-related data including at least one of the coordinate of the electrode corresponding to the electrode ID or a coordinate of another electrode coupled to the electrode and corresponding to the electrode ID in a process of coupling the electrode and the other electrode among the plurality of processes, and

the battery manufacturing method further comprises connecting the processed coordinate data in each of the processes with coordinates included in the first electrode ID-related data or the second electrode ID-related data through the electrode ID.

30. The battery manufacturing method of claim 28, further comprising:
additionally connecting the processed coordinate data or processed coordinate data related to the electrode ID with at least one piece of equipment data obtained by each of a plurality of pieces of process equipment or at least one piece of quality data related to quality of the electrode among at least one of the inspection data and the measurement data.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

EP 4 723 270 A2

[FIG. 11]

| | | FIRST ROLL PRESS ROLL MAP | SECOND ROLL PRESS ROLL MAP | NOTCHING ROLL MAP |
|---|---|---|---|---|
| CONDITIONS OF PRECEDING PROCESS | Top/Back INVERSION | Y | N | Y |
| | Start/End INVERSION | Y | Y | Y |

54

[FIG. 12]

EP 4 723 270 A2

[FIG. 13]

[FIG. 14]

| TIME | EID | INPUT LOT ID | ROLL MAP COORDINATE |
|---|---|---|---|
| 21-10-15 16:32 | SBKF010098 | FAAGJ114R1 | 89.79 |

[FIG. 15]

[FIG. 16]

| Cell ID | Mono Cell ID | LAMINATION (POSITIVE ELECTRODE) | NOTCHING (NEGATIVE ELECTRODE) | | ELECTRODE (NEGATIVE ELECTRODE) | | | | | | ELECTRODE (POSITIVE ELECTRODE) | |
|---|---|---|---|---|---|---|---|---|---|---|---|---|
| | | Lot ID | Lot ID | COORDINATE | S (LOT UNIT) | | R (LOT UNIT) | | C (LOT UNIT) | | SAME AS THE TABLE ON THE LEFT&… | … |
| | | | | | COORDINATE | CTP#1..n | COORDINATE | CTP#1..n | COORDINATE | CTP#1..n | | |
| | | | | | CTQ#1..m | | CTQ#1..m | | CTQ#1..m Foil Slurry | | | |
| Cell #1 | NEGATIVE ELECTRODE EID #1 | — | 1.0 | — | | | | | | | | |
| Cell #1 | NEGATIVE ELECTRODE EID #2 | | 1.1 | | | | | | | | | |
| ….. | ….. | | | | | | | | | | | |
| Cell #1 | NEGATIVE ELECTRODE EID #z | | z | | | | | | | | | |

[FIG. 17]

OBTAIN FIRST COORDINATE-RELATED DATA SET BY CONNECTING COORDINATE DATA OF ELECTRODE WITH INSPECTION DATA AND/OR MEASUREMENT DATA OF ELECTRODE — P110

OBTAIN SECOND COORDINATE-RELATED DATA SET BY CONNECTING PROCESSED COORDINATE DATA CORRESPONDING TO POSITION OF SAME REAL ELECTRODE WITH INSPECTION DATA AND/OR MEASUREMENT DATA — P120

OBTAIN IDENTIFICATION DATA SET INCLUDING ELECTRODE ID — P130

CONNECT ELECTRODE ID WITH PROCESSED COORDINATE DATA — P140

GENERATE MONITORING DATA BASED ON DATA ABOUT CONNECTION OF ELECTRODE ID AND PROCESSED COORDINATE DATA — P150

[FIG. 18]

[FIG. 19]

| PROCESS EVENT DATA | ELECTRODE MANUFACTURING PROCESS | | | ASSEMBLY PROCESS | | ACTIVATION PROCESS | MODULARIZATION PROCESS | PACK PROCESS | MIXING/TRANSFER OF TANK |
|---|---|---|---|---|---|---|---|---|---|
| | COATING | ROLL PRESS | SLITTING | NOTCHING | | | | | |
| | | | | | EID | | | | |
| COORDINATE | C1 | C2 | C3 | C4 | #1 | BATTERY CELL ID: %1 | BATTERY MODULE ID: @1 | BATTERY PACK ID: ▲1 | -SLURRY LOT NUMBER -ELECTRODE ROLL LOT NUMBER -TANK TRANSFER PATH ...... |
| INSPECTION DATA AND/ OR MEASUREMENT DATA | D1 | D2 | D3 | D4 | | D5 | D5 | D6 | |
| EQUIPMENT DATA | E1 | E2 | E3 | E4 | | E5 | E6 | E7 | |
| TIME-SERIES DATA | F1 | F2 | F3 | F4 | | F5 | F6 | F7 | |

[FIG. 20]

```
┌─────────────────────────────────────────────┐
│           INPUT SEARCH PARAMETER              │ ─── P10
└─────────────────────────────────────────────┘
                      │
                      ▼
┌─────────────────────────────────────────────┐
│  GENERATE MONITORING DATA OF BATTERY MANUFACTURING │ ─── P20
│       PROCESS RELATED TO ELECTRODE ID         │
└─────────────────────────────────────────────┘
                      │
                      ▼
┌─────────────────────────────────────────────┐
│            RECEIVE MONITORING DATA            │ ─── P30
└─────────────────────────────────────────────┘
                      │
                      ▼
┌─────────────────────────────────────────────┐
│            DISPLAY MONITORING DATA            │ ─── P40
└─────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230025288